# EUROPEAN PATENT APPLICATION

(11) **EP 3 396 880 A1**
(43) Date of publication of application: **31.10.2018**
(21) Application number: 18169747.5
(22) Date of filing: 27.04.2018
(51) Int. Cl.: H04J 3/16

(54) **METHOD FOR MAPPING DIGITAL SIGNALS INTO AN OPTICAL TRANSPORT NETWORK AND CORRESPONDING NETWORK ELEMENT, OPTICAL TELECOMMUNICATIONS NETWORK AND FRAME FOR OPTICAL TELECOMMUNICATIONS NETWORK**

(30) Priority: 27.04.2017 IT 201700045533
(71) Applicant: SM Optics S.r.l., 20124 Milano (IT)
(72) Inventor: FRIGERIO, Silvano, 22063 Cantu' Como (IT); LOMETTI, Alberto, 46049 Volta Mantovana Mantova (IT); QICHENG, Kuang, ChengDu (CN); YANGJUN, Li, ChengDu (CN)
(74) Representative: Penza, Giancarlo

(57) **Abstract**

It is disclosed a method for mapping digital signals into an Optical Transport Network. The method comprises the step a) of mapping (2-1; 2-1a, 2-1b, 2-1c) a plurality of input digital signals (Si; 10₁, 10₂, ... 10₅₃₆) into a respective plurality of frames (ODUe-₁₂; 11₁, 11₂, ... 11₅₃₆) of digital signals, said mapping further comprising the insertion of a respective path overhead field (11₁ₐ, 11₂ₐ, ... 11₅₃₆ₐ) into each frame of said plurality of frames of digital signals, wherein each path overhead field carries monitoring information of the quality of the respective frame, comprises the step b) of multiplexing (2d) said plurality of frames of digital signals in order to generate a multiplexed frame (50), comprises the step c) of mapping (3-1) at least a portion of the multiplexed frame (50) into a level zero Optical Channel Payload Unit (51, OPU0), comprises the step d) of mapping (3-1) said level zero Optical Channel Payload Unit (OPU0) into an Optical Channel Data Unit of level zero (ODU0), comprises the step e) of multiplexing (3-2; 3-3; 3-4; 3-5) said level zero Optical Channel Data Unit into an Optical Channel Data Unit of level higher than zero (ODU1; ODU2; ODU3; ODU4), and comprises the step f) of generating an Optical Transport Unit (OTU1; OTU2; OTU3; OTU4) carrying said Optical Channel Data Unit of level higher than zero.

## Description

### TECHNICAL FIELD OF THE INVENTION

The present invention generally relates to the field of telecommunications.

More in particular, the present invention concerns a method for mapping a digital signal into an optical transport network and a network element thereof.

### PRIOR ART

In the 1970s the plesiochronous digital hierarchy (PDH) was defined, which defines the modes of time division multiplexing of digital signals (indicated as "tributaries"); the multiplexed digital signal is transmitted in a telecommunications network, over an optical fibre or via radio.

The PDH network is of an asynchronous type, i.e. PDH network elements have the same nominal bit rate, but in reality they are not perfectly synchronous due to the variation in the frequency of the clock signals used by the PDH network elements.

The PDH protocol is slightly different in Europe, USA and Japan.

In Europe the base frame is called E1 and has a bit rate equal to 2.048 Mbit/s, arranged in 32 time slots of 64 Kbit/s each.

In the PDH network in Europe, the multiplexed signal is generated in the following manner:
- four E1 tributaries are then multiplexed to create an E2 flow having a bit rate equal to 8.448 Mbit/s, which represents the second level of the European PDH hierarchy;
- four E2 tributaries are subsequently multiplexed to create an E3 flow having a bit rate equal to 34.368 Mbit/s, which represents the third level of the European PDH hierarchy;
- four E3 tributaries are subsequently multiplexed to create an E4 flow having a bit rate equal to 139.264 Mbit/s, which represents the fourth level of the European PDH hierarchy;
- finally, four E4 tributaries are multiplexed to create an E5 flow having a bit rate equal to 564.992 Mbit/s, which represents the fifth and last level of the European PDH hierarchy.

Only the E1 and E3 tributaries are used today in Europe, whereas the others have been abandoned for the following reasons.

At the end of the 1980s, the PDH hierarchy was gradually replaced by the Synchronous Digital Hierarchy (SDH).

The main advantage of an SDH network compared to a PDH network is that in an SDH network it is possible to add/remove a single tributary channel without altering the entire signal in which the tributary channel considered isembedded.

The SDH network has thus been used for decades to carry digital signals in a synchronous manner over optical fibres of a telecommunications network.

The SDH network is defined in standards ITU-T G.707, G.783, G.784 and G.803 and is used in Europe and in the rest of the world, except in the United States and Canada, in which an equivalent standard indicated as SONET (Synchronous Optical Networking) has been defined.

In particular, the SDH network defines the following six transport hierarchies with the respective bit rates:
- STM-1: 155.52 Mbit/s;
- STM-4: 622.08 Mbit/s;
- STM-16: 2.488320 Gbit/s;
- STM-64: 9.953280 Gbit/s;
- STM-256: 39.813120 Gbit/s.

The SDH network allows to aggregate and transport digital signals of different types and thus with different bit rates, in particular the following ones:
- plesiochronous digital signals (PDH), in particular E1, E3 defined previously and also of the DS1, DS3 type;
- ATM;
- Ethernet with a speed of 10 Mbit/s, 100 Mbit/s and 1 Gbit/s.

It should be noted that the bit rates of the plesiochronous signals E1, E3 are 2.048 Mbit/s and 34.368 Mbit/s, respectively, which have low values compared to the bit rates of the SDH frames indicated above (at least equal to 155.52 Mbit/s).

In order to satisfy the increase in the demand for bandwidth, Wavelength Division Multiplexing (WDM) was subsequently introduced, based on which different wavelengths are used to transport information on a same optical fibre.

In order to implement WDM technology in optical telecommunications networks, Optical Transport Network (commonly indicated by the acronym OTN) architecture was introduced after 2009, which has been defined in standards ITU-T G.709, G.798 and G.872.

The OTN defines the following five transport hierarchies with the respective bit rates:
- level 0: 1.2 Gbit/s;
- level 1: 2.5 Gbit/s;
- level 2: 10 Gbit/s;
- level 3: 40 Gbit/s
- level 4: 100 Gbit/s.

The frame of the OTN network is indicated in the standards as "Optical Transport Unit", abbreviated OTU.

In particular, the level 1 frame is indicated as OTU1, the level 2 frame as OTU2, the level 3 frame as OTU3 and the level 4 frame as OTU4; the level 0 frame has been defined only for special low latency applications (OTU0LL) and is not interoperable among domains of different operators.

More in particular, the OTU-n frame is arranged into 4 rows, each composed of 4080 bytes, thus forming a matrix of 4 rows and 4,080 columns.

The OTU-n frame is organised in the following manner:
- "Optical Channel Payload Unit" (abbreviated OPU): it is composed of 4 rows and 3808 columns (from number 17 to number 3824) and represents the innermost field in which the tributary digital signal is mapped;
- OPU overhead: it is composed of 4 rows and 2 columns (numbers 15 and 16) and together with the OPU forms an "Optical Channel Data Unit" (abbreviated ODU);
- ODU overhead: it is composed of 3 rows (from 2 to 4) and 14 columns (from 1 to 14);
- OTU overhead: it is composed of one row (number 1) and 7 columns (from 8 to 14);
- frame alignment word and multi-frame counter: it is composed of 7 bytes (row 1 and columns 1 to 7), of which the first 6 are the frame alignment word and the seventh byte is the multi-frame counter;
- error correction code (indicated as FEC): it is composed of 4 rows and 256 columns (from number 3825 to 4080).

The higher order OTU frame is constructed by multiplexing the ODU field several times and the result obtained from the multiplexing becomes the higher order OPU field, generating the associated higher order ODU.

Some examples are given:
- two ODUOs are multiplexed and form an OPU1, thus generating an ODU1 and the respective OTU1 frame;
- four ODU1s are multiplexed and form an OPU2, thus generating an ODU2 and the respective OTU2 frame;
- ten ODU2s are multiplexed and form an OPU4, thus generating an ODU4 and the respective OTU4 frame;
- eight ODUOs are multiplexed and form an OPU2, thus generating an ODU2 and the respective OTU2 frame;
- forty ODU1s are multiplexed and form an OPU4, thus generating an ODU4 and the respective OTU4 frame;
- eighty ODUOs are multiplexed and form an OPU4, thus generating an ODU4 and the respective OTU4 frame.

The presence of the different OTU1/ OTU2/ OTU3/ OTU4 levels allows different types of digital signals to be mapped over the OTN network, including both different STM-n (Synchronous Transport Module of level n) flows of the SDH network and Ethernet flows of various types.

In particular:
- OTU1 (f_{bit}= 2.666 Gbit/s) is adapted to carry the STM-16 frame (f_{bit}= 2,488 Gbit/s);
- OTU2 (f_{bit}= 10.709 Gbit/s) is adapted to carry the STM-64 frame (f_{bit}=9.95 Gbit/s) and the Ethernet 10 Gigabit frame;
- OTU3 (f_{bit}= 43.018 Gbit/s) is adapted to carry the STM-256 frame (f_{bit}=39.81 Gbit/s);
- OTU4 (f_{bit}= 111.81 Gbit/s) is adapted to carry the 100 Gigabit Ethernet frame.

STM-n flows have thus been used for a number of years as tributaries of the OTN.

The Applicant has perceived that today, however, network operators have the need to create OTN networks using, as tributaries of the OTN network, directly low bit rate digital signals (for example the E1/ E3 signals of the standard European PDH), that is without using STM-n flows of the SDH network.

In fact, the insertion/extraction of low bit rate digital signals (for example, E1/ E3) in the OTN using STM-n flows has several disadvantages.

A first disadvantage is that of requiring the crossing of different layers of the SDH network.

For example, in the case wherein digital signals of the E1 type are inserted, the method envisaged by ITU standards provides for the creation of a SDH flow of the STM-16 type and then the mapping of the STM-16 flow into the level 1 optical data unit (indicated as ODU1).

More in particular, the method provides for crossing the following layers:
E1 -> VC12-> TU12-> VC4-> AU4-> STM-16-> OPU1-> ODU1-> OTUk (k= 1, 2, 3, 4)
wherein the first elements (VC12, TU12, VC4, AU4, STM-16) are defined by the SDH standard, whereas the last three elements (OPU1, ODU1, OTUk) are defined by the OTN standard.

Said crossing of different layers of the SDH network requires a complex management of the telecommunications network.

Furthermore, said crossing of different layers of the SDH network requires to carry out at least three different alignment recovery processes, which are subject to malfunctioning in the event of the presence of an error rate.

Finally, said crossing of different layers of the SDH network requires to carry out various plesiochronous justification processes, which degrade the digital signals since they generate jitter and wander thereon (especially for STM-16, AU4, TU12).

A second disadvantage of using different network levels is that of using too many bytes of redundancy, thus wasting bandwidth that could be used to transport payloads.

Furthermore, the abandonment of the SDH network must take place in such a way as to maintain the same functions as are presently available in the OTN, such as, for example:
- to maintain the possibility of inserting/removing/switching a single low bit rate digital signal, without altering the entire signal in which the low bit rate digital signal considered is embedded;
- to maintain the possibility of monitoring the quality of the network level which carries the low bit rate digital signals;
- to maintain the possibility of transporting low bit rate digital signals through telecommunications networks of different types (mesh, ring, etc.);
- to maintain the possibility of carrying out a sufficiently fast protection of traffic, in the event of faults in the OTN network.

EP 1826926 A1 discloses transparent mapping of a "low rate" input digital signal (such as Gigabit Ethernet, FC 100, CBR 155M, CBR 622M) into OTN.

EP 1881669 A1 discloses a method and device for transmitting LAN signals over OTN.

### SUMMARY OF THE INVENTION

The present invention relates to a method for mapping digital signals into an Optical Transport Network as defined in the enclosedclaim 1 and by its preferred embodiments described in the dependent claims 2 to 9.

The Applicant has perceived that the method in accordance with the present invention has the following advantages:
- it reduces the number of layers used to map a plurality of services carried by a plurality of low bit rate digital signals in the Optical Transport Network (OTN), thus simplifying the management of the telecommunications network;
- it reduces the number of alignment recovery processes;
- it reduces the number of justification processes from three to one, thus reducing the generation of jitter and wander in the low bit rate digital signals;
- it increases the use of bandwidth, thus increasing the number of channels carrying payloads;
- it allows a single low bit rate digital signal to be inserted/removed/switched, without altering the entire signal wherein the low bit rate digital signal considered is embedded;
- it allows to perform a monitoring of the quality of the level of the Optical Transport Network carrying the low bit rate digital signals, both between two end points of the Optical Transport Network and between two intermediate points of the Optical Transport Network;
- it allows to carry low bit rate digital signals across an optical telecommunications network of different types (mesh, ring, etc.);
- it allows to receive in a given point a plurality of low bit rate digital signals originating from different sources and which are propagated in the optical telecommunications network through different paths;
- it allows to perform a sufficiently fast traffic protection in the event of faults in the Optical Transport Network.

It is also an object of the present invention a network element, wherein the network element is defined in the enclosed claim 10 and in the preferred embodiments described in the dependent claims 11 to 13.

It is also an object of the present invention an optical telecommunications network as defined in the enclosed claim 14.

It is also an object of the present invention a frame of a Optical Channel Payload Unit of level 0 for an Optical Transport Network as defined in the enclosed claim 15 and in the preferred embodiment described in the dependent claim 16.

### BRIEF DESCRIPTION OF THE DRAWINGS

Further characteristics and advantages of the invention will emerge from the following description of a preferred embodiment and variants thereof, said description being provided by way of example with reference to the attached drawings, wherein:
- Figures 1A-1C schematically show a method for mapping/demapping digital signals into/from an Optical Transport Network according to a first and a second embodiment of the invention;
- Figure 2A shows the frames generated by a portion of the mapping method of Figures 1A-1B;
- Figures 2B-2C show a possible multiplexed frame of a digital signal generated in the mapping method according to the invention;
- Figure 3A shows a possible frame of a Optical Channel Payload Unit of level 0 for an Optical Transport Network according to the invention;
- Figure 3B shows a plurality of possible frames of a Optical Channel Data Unit of level 0 according to the invention;
- Figures 4A-4B show the method for mapping digital signals into an Optical Transport Network according to a first variant of the invention;
- Figures 4C-4D show a possible multiplexed frame according to the first variant;
- Figures 4E-4F show a possible multiplexed frame of a digital signal generated in the mapping method according to the first variant of the invention;
- Figures 4G-4H show another possible multiplexed frame of a digital signal generated in the mapping method according to the first variant of the invention;
- Figures 5A-5B show a possible multiplexed frame of a digital signal generated in the mapping method according to a second variant of the invention;
- Figure 5C shows an example of definition of two fields of the multiplexed frame of the second variant of the invention;
- Figures 5D-5E show the method for mapping digital signals into an Optical Transport Network according to a second variant of the invention and a possible multiplexed frame according to the second variant;
- Figures 6A-6B show a block diagram of a functional model of a network element according to the two embodiments of the invention;
- Figures 7A-7B show a possible architecture of two network elements implementing the functional model of Figures 6A-6B, respectively;
- Figures 8A-8D show a procedure of migration from a traditional SDH network to an OTN network for carrying digital signals according to the invention.

### DETAILED DESCRIPTION OF THE INVENTION

Note that in the description below, even if they are appeared in different embodiments of the invention, identical or similar blocks, components or modules are indicated by the same numerical references in the figures.

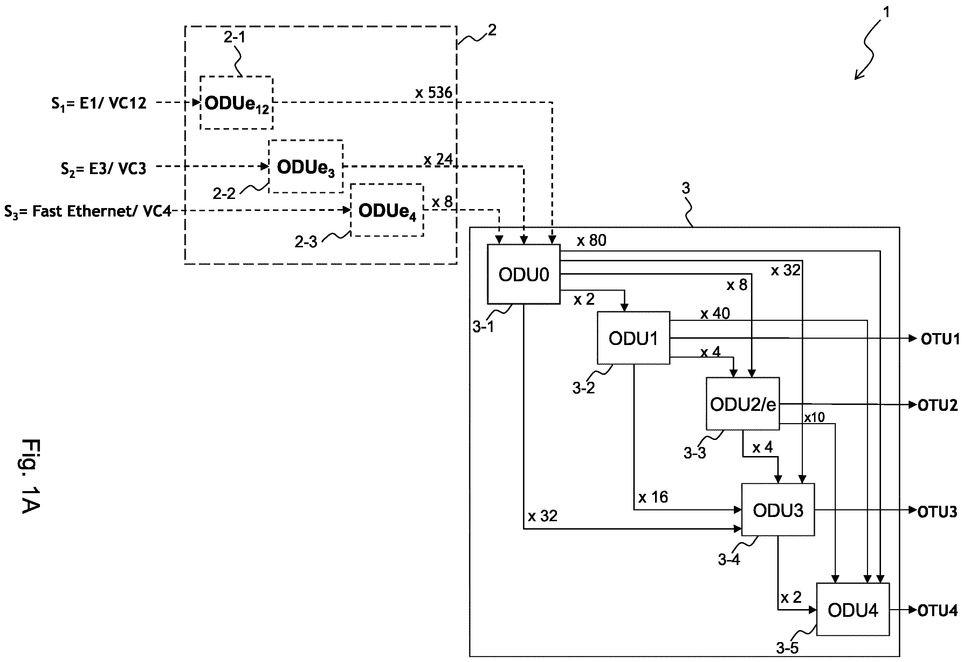

With reference to Figure 1A, it shows a method 1 for mapping/demapping a plurality of digital signals S₁, S₂, S₃ into/from an Optical Transport Network according to a first embodiment of the invention.

The term "plurality of digital signals" means a plurality of tributary services that are added into the Optical Transport Network (OTN) and are carried across it, such as for example voice services or audio and/or video data.

In other words, a telecommunications network comprises a "client" network layer that is composed of the digital signals S₁, S₂, S₃ and comprises a "server" network layer that is composed of the Optical Transport Network (OTN).

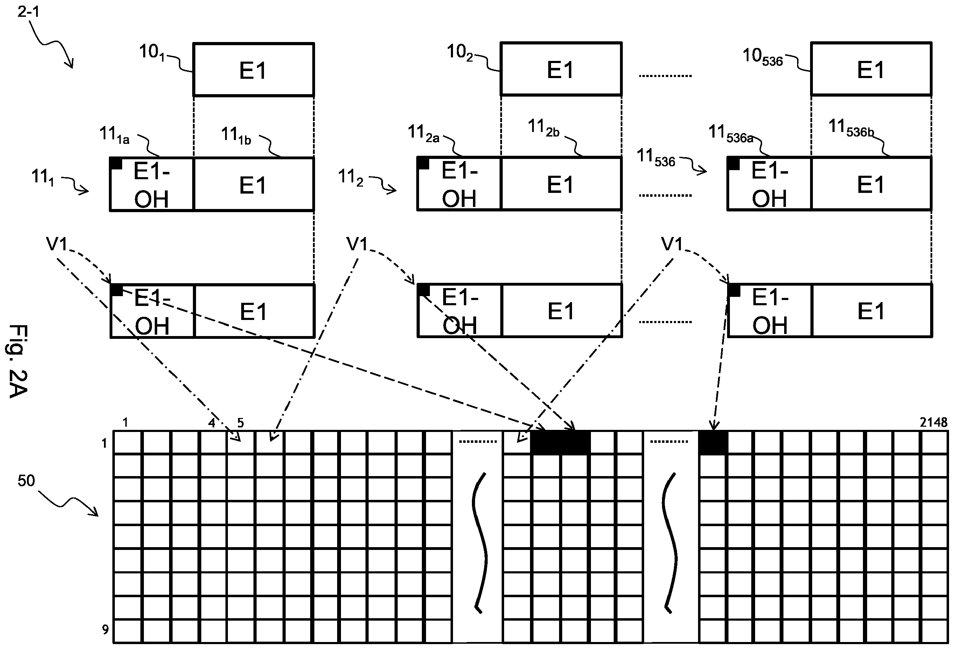

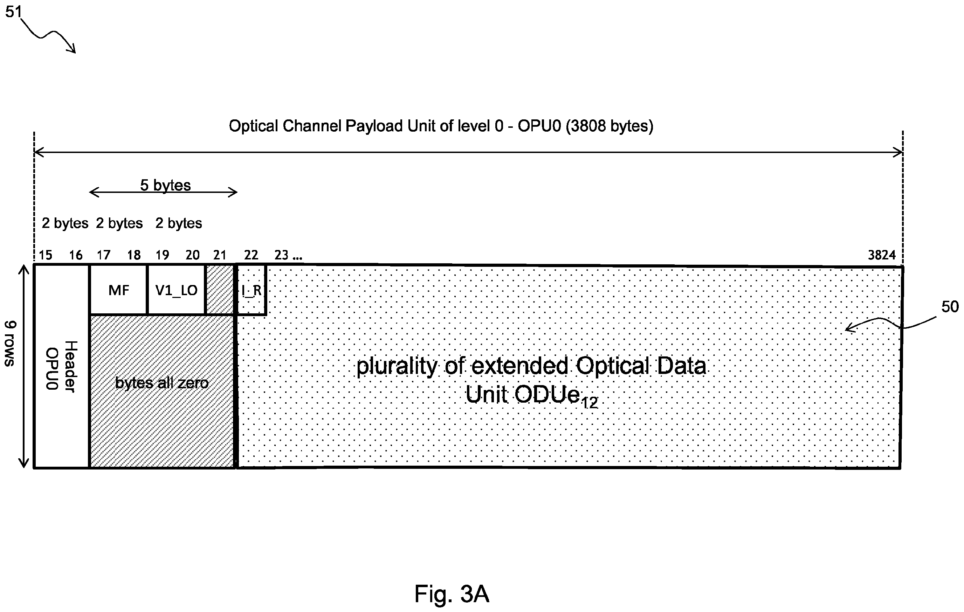

The method 1 represents a modified mapping/demapping scheme for the Optical Transport Network, which shows, for the sake of simplicity, only the functions necessary to illustrate how the mapping/demapping is carried out, thus leaving out other functions that will be illustrated in greater detail below with reference to Figures 2A-2C, 3A-3B.

The term "Optical Transport Network" means a WDM optical telecommunications network carrying frames with structures defined in the standards ITU-T G.709, G.798 and G.872.

In particular, said standards define four possible OTU frames as illustrated previously, namely, the following:
- the level 1 frame indicated as OTU1 frame, having a bit rate equal to about 2.5 Gbit/s;
- the level 2 frame indicated as OTU2 frame, having a bit rate equal to about 10 Gbit/s;
- the level 3 frame indicated as OTU3 frame, having a bit rate equal to about 40 Gbit/s;
- the level 4 frame indicated as OTU4 frame, having a bit rate equal to about 100 Gbit/s.

Furthermore, each of the possible OTU1/2/3/4 frames comprises a respective field indicated as "Optical Channel Data Unit", which will be abbreviated hereinafter as ODU.

In particular:
- the OTU1 frame comprises the ODU1 field;
- the OTU2 frame comprises the ODU2 field;
- the OTU3 frame comprises the ODU3 field;
- the OTU4 frame comprises the ODU4 field.

Finally, each of the Optical Channel Data Units comprises a respective field indicated as "Optical Channel Payload Unit", which will be abbreviated hereinafter as OPU.

In particular:
- the ODUO field comprises the OPUO field;
- the ODU1 field comprises the OPU1 field;
- the ODU2 field comprises the OPU2 field;
- the ODU3 field comprises the OPU3 field;
- the ODU4 field comprises the OPU4 field.

It will be described hereinafter the mapping method 1 in the left-to-right direction of Figure 1A.

The mapping method 1 comprises two portions:
- a first portion 2 (indicated in Figure 1A with a broken line) in which it is performed the mapping of a plurality of input digital signals S₁ (or S₂ or S₃) into a Optical Channel Data Unit of level 0 (indicated in Figure 1A as ODUO), as will be explained in greater detail with reference to Figures 2A-2C;
- a second portion 3 (indicated in Figure 1A with a continuous line), in which a plurality of Optical Channel Data Units of level 0 (ODUO) is multiplexed into an Optical Channel Data Unit of a higher level n (n= 1, 2, 3, 4), which is indicated in Figure 1A as ODUn (ODU1 for n=1, ODU2 for n=2, ODU3 for n=3, ODU4 for n=4).

It should be noted that the second portion 3 is only a possible embodiment, i.e. multiplexing of different types are also possible, for example a combination of at least a part of Optical Channel Data Unit of level 0 (ODUO), level 1 (ODU1), level 2 (ODU2) or level 3 (ODU3).

The bit rate of each of the plurality of input digital signals S₁, S₂, S₃ is low compared to the bit rate of the Optical Channel Data Unit of level 0 (ODUO).

For example:
- the plurality of first input digital signals S₁ carries a plurality of plesiochronous digital signals of the E1 type, each one having a bit rate equal to 2.048 Mbit/s;
- the plurality of first input digital signals S₁ carries a plurality of lower order Virtual Containers VC12, each one having a bit rate equal to 2.240 Mbit/s;
- the plurality of second input digital signals S₂ carries a plurality of plesiochronous digital signals E3, each one having a bit rate equal to 34.368 Mbit/s;
- the plurality of second input digital signals S₂ carries a plurality of higher order Virtual Containers VC3, each one having a bit rate equal to 48.960 Mbit/s;
- the plurality of third input digital signals S₃ carries a plurality of digital signals of the Fast Ethernet type, each one having a bit rate equal to 100 Mbit/s;
- the plurality of third input digital signals S₃ carries a plurality of higher order Virtual Containers VC4, each one having a bit rate equal to 150.336 Mbit/s.

It should be noted that the mapping functions of the second portion 3 comply with ITU-T standards regarding the OTN network, whereas the mapping functions of the first portion 2 are not envisaged by ITU-T standards regarding the OTN network.

In particular, the mapping method 1 comprises:
- step 2-1, wherein a plurality of first input digital signals S₁ is mapped into a respective first plurality of new frames, each indicated hereinafter as first "extended optical data unit" ODUe₁₂, wherein the term "extended" is used to indicate that it is a new frame compared to the frames defined in standard ITU-T G.709;
- step 3-1, wherein a plurality of frames of the first extended optical data unit ODUe₁₂ is mapped into a Optical Channel Data Unit of level 0 indicated as ODUO in the ITU-T G.709 standard.

The term "frame" means a data structure having a beginning and an end, said data structure being representative of a sequence of bytes arranged in a matrix composed of a defined number of rows, each row composed of a defined number of columns, wherein each row-column coordinate represents a byte; said data structure typically comprises a portion carrying an overhead and a portion carrying a payload.

The evolution, over time, of the data of each frame cycle extends from the first byte of the first row to the last byte of the first row, then from the first byte of the second row to the last byte of the second row, and so on from the third to the last row.

A frame can carry the data of a single digital signal or it can carry the data of two or more digital signals by means of time division multiplexing: in the latter case, the cycle of a frame is completed when all of the digital signals to be transmitted have been scanned at least one time.

Therefore, the term frame (referred to the first extended optical data unit ODUe₁₂) means that the data of the digital signal carried by the first extended optical data unit ODUe₁₂ are organised in a matrix composed of a defined number of rows, each row composed of a defined number of columns, wherein each row-column coordinate represents a byte and wherein the evolution, over time, of the data extends from the first byte of the first row to the last byte of the first row, then from the first byte of the second row to the last byte of the second row, and so on from the third to the last row.

It should be noted that, for the sake of simplicity, Figure 1A shows a single input digital signal S₁ and a respective first extended optical data unit ODUe₁₂, but in the considered example there is a plurality *n* of input digital signals S₁ and thus a respective first plurality *n* of first extended optical data units ODUe₁₂.

Preferably, the plurality n of first input digital signals S₁ carries a respective plurality *n* of plesiochronous digital signals E1, each one having a bit rate equal to 2.048 Mbit/s.

Alternatively, each of the plurality n of first input digital signals S₁ is a digital signal organised in a frame of a lower order Virtual Container indicated as VC12 in ITU standards regarding the SDH network, having a bit rate equal to 2.240 Mbit/s.

Preferably, the number of the plurality n of first input digital signals S₁ (and thus of the plurality *n* of frames of the first extended optical data unit ODUe₁₂) that are mapped into the Optical Channel Data Unit of level 0 (ODUO) is equal to *n*= 536, as schematically indicated in Fig.1A with the notation "x 536".

The previous considerations regarding the plurality of first input digital signals S₁ are similarly applicable to the plurality of second input digital signals S₂ and to the plurality of third input digital signals S₃.

Therefore, the mapping method 1 further comprises:
- step 2-2, wherein a plurality *m* of second input digital signals S₂ is mapped into a respective second plurality *m* of new frames of a second extended optical data unit ODUe₃ (different from the frames of the first extended optical data unit ODUe₁₂);
- step 2-3, wherein a plurality *k* of third input digital signals S₃ is mapped into a respective third plurality *k* of new frames of a third extended optical data unit ODUe₄ (different from the frames of the first extended optical data unit ODUe₁₂ and different from the frames of the second extended optical data unit ODUe₃);
- step 3-1, wherein a plurality of frames of the second extended optical data unit ODUe₃ is mapped into a Optical Channel Data Unit of level 0 (ODUO), and wherein a plurality of frames of the third extended optical data unit ODUe₄ is mapped into a level 0 Optical Channel Data Unit (ODUO).

The multiplexing scheme of the second portion 3 complies with ITU-T G.709 standard and Figure 1A shows the different multiplexing options that are relevant for the purpose of explaining the invention.

In particular, a plurality of Optical Channel Data Units of level 0 (ODUO) is multiplexed into a higher level Optical Channel Data Unit, according to the following scheme:
- two Optical Channel Data Units of level 0 (ODUO) are multiplexed into one Optical Channel Data Unit of level 1 (ODU1), as shown in the transition from step 3-1 to step 3-2;
- eight Optical Channel Data Units of level 0 (ODUO) are multiplexed into one Optical Channel Data Unit of level 2 (ODU2), as shown in the transition from step 3-1 to step 3-3;
- thirty-two Optical Channel Data Units of level 0 (ODUO) are multiplexed into one Optical Channel Data Unit of level 3 (ODU3), as shown in the transition from step 3-1 to step 3-4;
- eighty Optical Channel Data Units of level 0 (ODUO) are multiplexed into one Optical Channel Data Unit of level 4 (ODU4), as shown in the transition from step 3-1 to step 3-5;
- four Optical Channel Data Units of level 1 (ODU1) are multiplexed into one Optical Channel Data Unit of level 2 (ODU2), as shown in the transition from step 3-2 to step 3-3;
- sixteen Optical Channel Data Units of level 1 (ODU1) are multiplexed into one Optical Channel Data Unit of level 3 (ODU3), as shown in the transition from step 3-2 to step 3-4;
- forty Optical Channel Data Units of level 1 (ODU1) are multiplexed into one Optical Channel Data Unit of level 4 (ODU4), as shown in the transition from step 3-2 to step 3-5;
- four Optical Channel Data Units of level 2 (ODU2) are multiplexed into one Optical Channel Data Unit of level 3 (ODU3), as shown in the transition from step 3-3 to step 3-4;
- ten Optical Channel Data Units of level 2 (ODU2) are multiplexed into one Optical Channel Data Unit of level 4 (ODU4), as shown in the transition from step 3-3 to step 3-5;
- two Optical Channel Data Units of level 3 (ODU3) are multiplexed into one Optical Channel Data Unit of level 4 (ODU4), as shown in the transition from step 3-4 to step 3-5.

Finally, it is generated, alternatively:
- the frame of the Optical Transport Unit of level 1 (OTU1) carrying two Optical Channel Data Units of level 1 (ODU1);
- the frame of the Optical Transport Unit of level 2 (OTU2) carrying up to eight Optical Channel Data Units of level 0 (ODUO), or up to four Optical Channel Data Units of level 1 (ODU1), or a combination of Optical Channel Data Units of level 0 (ODUO) and level 1 (ODU1);
- the frame of the Optical Transport Unit of level 3 (OTU3) carrying up to thirty-two Optical Channel Data Units of level 0 (ODUO), or up to sixteen Optical Channel Data Units of level 1 (ODU1), or up to four Optical Channel Data Units of level 2 (ODU2), or a combination of Optical Channel Data Units of level 0 (ODU0)/level 1 (ODU1)/level 2 (ODU2);
- the frame of the Optical Transport Unit of level 4 (OTU4) carrying up to eighty Optical Channel Data Units of level 0 (ODUO), or up to forty Optical Channel Data Units of level 1 (ODU1), or up to ten Optical Channel Data Units of level 2 (ODU2), or a combination of Optical Channel Data Units of level 0 (ODU0)/level 1 (ODU1)/level 2 (ODU2)/level 3 (ODU3).

Preferably, the plurality *m* of second input digital signals S₂ carries a respective plurality *m* of plesiochronous digital signals E3, each one having a bit rate equal to 34.368 Mbit/s.

Alternatively, each of the plurality *m* of second input digital signals S₂ is a digital signal organised in a frame of a higher order Virtual Container indicated as VC3 in ITU standards regarding the SDH network, having a bit rate equal to 48.960 Mbit/s.

Preferably, the number of the plurality *m* of second input digital signals S₂ (and thus of the plurality *m* of frames of the second extended optical data unit ODUe₃) that are mapped in the level 0 Optical Channel Data Unit (ODUO) is equal to *m*= 24, as schematically indicated in Fig.1A with the notation "x 24".

Preferably, the plurality *k* of third input digital signals S₃ carries a respective plurality *k* of digital signals of the Fast Ethernet type, each one having a bit rate equal to 100 Mbit/s.

Alternatively, each of the plurality *k* of third input digital signals S₃ is a digital signal organised in a frame of a higher order Virtual Container, indicated as VC4 in ITU standards regarding the SDH network, having a bit rate equal to 150.336 Mbit/s.

Preferably, the number of the plurality *k* of third input digital signals S₃ (and thus of the plurality *k* of frames of the third extended optical data unit ODUe₄) that are mapped into the level 0 Optical Channel Data Unit (ODUO) is equal to 8, as schematically indicated in Fig.1A with the notation "x 8".

It should be noted that the bit rates of each digital signal of the plurality of first, second and third input digital signals S₁, S₂, S₃ are low compared to the bit rates of the frames of the Optical Transport Units OTU1, OTU2, OTU4.

The method for demapping the plurality of digital signals S₁, S₂, S₃ from the Optical Transport Network of the first embodiment is obtained considering Figure 1A in the right-to-left direction and applying the previous considerations regarding the mapping method 1 in the opposite order.

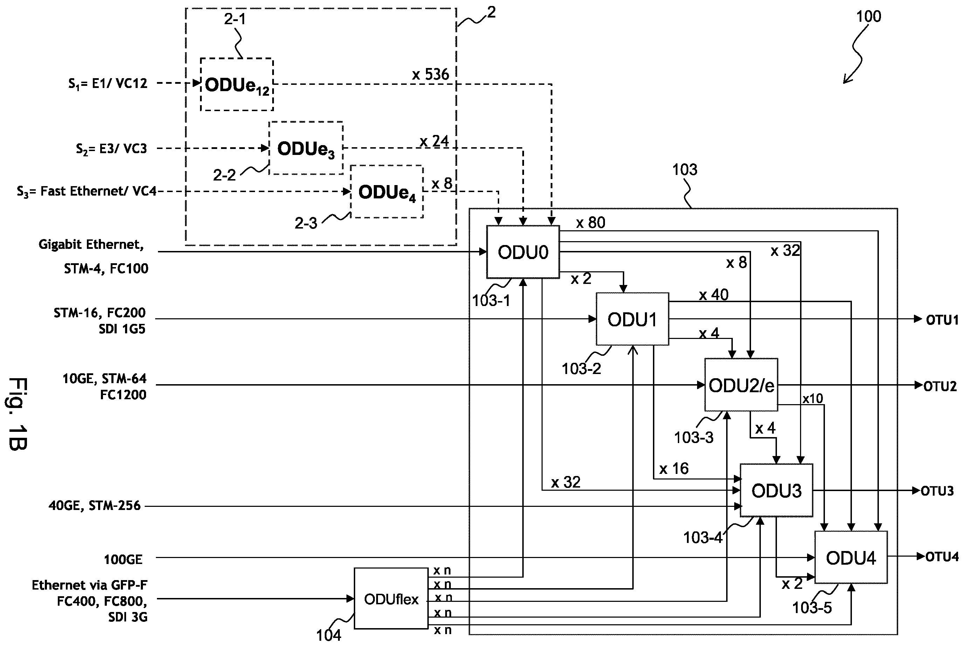

With reference to Figure 1B, it shows a method 100 for mapping a plurality of digital signals S₁, S₂, S₃ into an Optical Transport Network according to a second embodiment of the invention.

The second embodiment of the invention of Figure 1B differs from the first embodiment of Figure 1A in that the second portion 103 is able to receive at the input any type of digital signal, such as for example STM-n flows of the SDH standard, thus allowing STM-n flows to be transported in a transparent manner across the Optical Transport Network.

In particular:
- step 103-1 of the second embodiment differs from step 3-1 of the first embodiment in that it is further configured to map a digital signal of the Gigabit Ethernet type or STM-1/4 or Fiber Channel 100 flows into the Optical Channel Data Unit of level 0 (ODUO);
- step 103-2 of the second embodiment differs from step 3-2 of the first embodiment in that it is further configured to map a digital signal of STM-16 or Fiber Channel 200 or SDI 1G5 type flows into the Optical Channel Data Unit of level 1 (ODU1);
- step 103-3 of the second embodiment differs from step 3-3 of the first embodiment in that it is further configured to map a 10 Gigabit Ethernet type digital signal or STM-64 or Fiber Channel 1200 flows into the Optical Channel Data Unit of level 2 (ODU2/e);
- step 103-4 of the second embodiment differs from step 3-5 of the first embodiment in that it is further configured to map a digital signal of the 40 Gigabit Ethernet type or STM-256 flows into the Optical Channel Data Unit of level 3 (ODU3);
- step 103-5 of the second embodiment differs from step 3-5 of the first embodiment in that it is further configured to map a digital signal of 100 Gigabit Ethernet type into the Optical Channel Data Unit of level 4 (ODU4).

Preferably, the mapping method 100 of the second embodiment further comprises step 104 wherein a plurality *n* of input digital signals with different possible bit rates (for example, signals of the Ethernet or Fiber Channel or SDI type) is mapped into the Optical Channel Data Unit of level 0 (ODUO) or level 1 (ODU1) or level 2 (ODU2) or level 4 (ODU4), as shown schematically in Figure 1B.

It should be noted that Figure 1B shows only some examples of digital signals of services that can be transported by the Optical Transport Network (OTN).

The method for demapping the plurality of digital signals S₁, S₂, S₃ from the Optical Transport Network of the second embodiment is obtained considering Figure 1B in the right-to-left direction and applying the previous considerations related to the mapping method 100 in the opposite order.

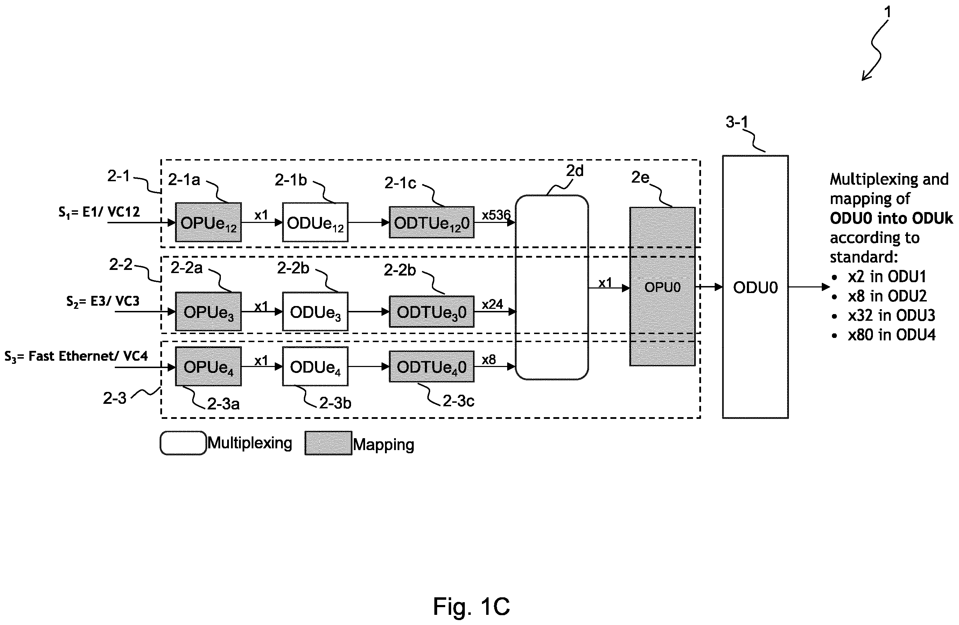

With reference to Figure 1C, it shows in greater detail the generation of the Optical Channel Data Unit of level 0 (ODUO) of the mapping method 1.

In step 2-1a, a new frame indicated as first "extended optical path unit" OPUe₁₂ is generated (by means of a local clock signal) and a first input digital signal S₁ is mapped into a first frame of the first extended optical path unit OPUe₁₂.

Preferably, in step 2-1a the mapping is carried out analogously to what is described in par. 10.1.4.1 of standard ITU-T G.707 (01/2007).

In step 2-1b it is performed the multiplexing of the first frame of the first extended optical path unit OPUe₁₂ and of a respective path overhead field into a first frame of the first extended optical data unit ODUe₁₂.

In step 2-1c, a new frame indicated as first "extended optical data tributary unit" ODTUe₁₂ is generated; in particular, it is performed the mapping of the first frame of the first extended optical data unit ODUe₁₂ and of a respective pointer field into a first frame of the first extended optical data tributary unit ODTUe₁₂, wherein it is calculated a first value of the pointer representative of the starting position of the first frame of the first extended optical data unit ODUe₁₂ inside the level 0 Optical Channel Data Unit (ODUO) in order to carry out an adaptation between the frequency of the first extended optical data unit ODUe₁₂ and the frequency of the level 0 Optical Channel Data Unit (ODUO), as will be explained in greater detail below.

Analogously:
- in step 2-1a it is generated (by means of a local clock signal) a second frame of the first extended optical path unit OPUe₁₂ and it is performed the mapping of a second input digital signal S₁ into the second frame of the first extended optical path unit OPUe₁₂;
- in step 2-1b it is performed the multiplexing of the second frame of the first extended optical path unit OPUe₁₂ and of a respective path overhead field into a second frame of the first extended optical data unit ODUe₁₂;
- in step 2-1c it is performed the mapping of the second frame of the first extended optical data unit ODUe₁₂ and of a respective pointer field into a second frame of the first extended optical data tributary unit ODTUe₁₂, wherein it is calculated a second value of the pointer representative of the starting position of the second frame of the first extended optical data unit ODUe₁₂ inside the level 0 Optical Channel Data Unit.

The process illustrated above is repeated from the third to the 536th (last) input digital signal S₁ so as to generate 536 frames of the first extended optical data tributary unit ODTUe₁₂ and this in step 2d it is performed a time division multiplexing of the 536 frames of the first extended optical data tributary unit ODTUe₁₂ into a new frame 50 indicated hereinafter as multiplexed frame.

The previous considerations regarding steps 2-1a, 2-1b, 2-1c are applicable in an analogous manner to steps 2-2a, 2-2b, 2-2c, respectively:
- in step 2-2a, a new frame indicated as second "extended optical path unit" OPUe₃ (different from the first extended optical path unit OPUe₁₂) is generated and a first input digital signal S₂ is mapped into a first frame of the second extended optical path unit OPUe₃;
- in step 2-2b, the first frame of the second extended optical path unit OPUe₃ and of a respective path overhead field is multiplexed into a first frame of the second extended optical data unit ODUe₃ (different from the first frame of the first extended optical data unit ODUe₁₂);
- in step 2-2c, a new frame indicated as second "extended optical data tributary unit" ODTUe₃ (different from the first extended optical data tributary unit ODTUe₁₂) is generated and the first frame of the second extended optical data unit ODUe₃ and of a respective pointer field is mapped into a first frame of the second extended optical data tributary unit ODTUe₃ (different from the first frame of the first extended optical data tributary unit ODTUe₁₂);
- in step 2-2a, a second frame of the second extended optical path unit OPUe₃ is generated and a second input digital signal S₂ is mapped into the second frame of the second extended optical path unit OPUe₃;
- in step 2-2b, the second frame of the second extended optical path unit OPUe₃ and of a respective path overhead field is multiplexed into a second frame of the second extended optical data unit ODUe₃;
- in step 2-2c, the second frame of the second extended optical data unit ODUe₃ and of a respective pointer field is mapped into a second frame of the second extended optical data tributary unit ODTUe₃;
- the steps illustrated above are repeated from the third to the 24th (last) input digital signal S₂ in order to generate 24 frames of the second extended optical data tributary unit ODTUe₃ and then in step 2d the 24 frames of the second extended optical data tributary unit ODTUe₃ are time division multiplexed into the multiplexed frame 50.

The previous considerations regarding steps 2-1a, 2-1b, 2-1c are applicable in an analogous manner to steps 2-3a, 2-3b, 2-3c, respectively, i.e.:
- in step 2-3a, a new frame indicated as third "extended optical path unit" OPUe₄ (different from the first extended optical path unit OPUe₁₂ and from the second extended optical path unit OPUe₃) is generated and a first input digital signal S₃ is mapped into a first frame of the third extended optical path unit OPUe₄;
- in step 2-3b, the first frame of the third extended optical path unit OPUe₄ and of a respective path overhead field is multiplexed into a first frame of the third extended optical data unit ODUe₄ (different from the first frame of the first extended optical data unit ODUe₁₂ and from the first frame of the second extended optical data unit ODUe₃);
- in step 2-3c, a new frame indicated as third "extended optical data tributary unit" ODTUe₄ (different from the first extended optical data tributary unit ODTUe₁₂ and from the second extended optical data tributary unit ODTUe₃) is generated and the first frame of the third extended optical data unit ODUe₄ and of a respective pointer field is mapped into a first frame of the third extended optical data tributary unit ODTUe₄ (different from the first frame of the first extended optical data tributary unit ODTUe₁₂ and different from the first frame of the third extended optical data tributary unit ODTUe₃);
- in step 2-3a, a second frame of the third extended optical path unit OPUe₄ is generated and a second input digital signal S₃ is mapped into the second frame of the third extended optical path unit OPUe₄;
- in step 2-3b, the second frame of the third extended optical path unit OPUe₄ and of a respective path overhead field is multiplexed into a second frame of the third extended optical data unit ODUe₄;
- in step 2-3c, the second frame of the third extended optical data unit ODUe₄ and of a respective pointer field is mapped into a second frame of the third extended optical data tributary unit ODTUe₄;
- the steps illustrated above are repeated from the third to the eighth (last) input digital signal S₃ in order to generate 8 frames of the third extended optical data tributary unit ODTUe₄ and then in step 2d the 8 frames of the third extended optical data tributary unit ODTUe₄ are time division multiplexed into the multiplexed frame 50.

In step 2e it is generated a new frame indicated as Optical Channel Payload Unit of level 0 (abbreviated OPUO) and it is performed a synchronous mapping of at least a part of the multiplexed frame 50 and of further fields into the frame of the Optical Channel Payload Unit of level 0 (OPUO), as will be explained in greater detail below in relation to the description of Fig.3A-3B.

In step 3-1 it is performed the multiplexing of the Optical Channel Payload Unit of level 0 (OPUO) and of a respective overhead field into the Optical Channel Data Unit of level 0 (indicated briefly as ODUO in the OTN standard), as will be explained in greater detail below in relation to the description of Fig.3A-3B.

It should be noted that it is possible for the digital signal S₁ of the network client layer to be already organised in a frame, i.e. a data structure organised in a plurality of rows, each row composed of a plurality of columns.

For example, the digital signal of the service input into the OTN is a lower order VC12 type Virtual Container: in this case the frame of the first extended optical data unit ODUe₁₂ is composed of the VC12 frame, to which the path overhead field is added.

Analogously:
- in step 2-2a, the digital signal S₂ is a higher order Virtual Container of VC3 type, to whose frame the path overhead field is added so that together they generate the frame of the second extended optical data unit ODUe₃;
- in step 2-3a, the digital signal S₃ is a higher order Virtual Container of VC4 type, to whose frame the path overhead field is added, so that together they generate the frame of the third extended optical data unit ODUe₄.

With reference to Figure 2A, it shows the frames generated in step 2-1 of the first portion 2 of the mapping method 1, in the case in which 536 E1 type plesiochronous digital signals are received as input.

Each plesiochronous signal E1 is mapped into a respective frame of the first extended optical data unit ODUe₁₂, thus generating 536 frames of the first extended optical data unit ODUe₁₂.

In particular, the data 10₁ of the first plesiochronous signal E1 are mapped into a first frame 11₁ of the first extended optical data unit ODUe₁₂ (step 2-1a illustrated above) and the path overhead field is added (step 2-1b illustrated above), the path overhead field having the function of monitoring the quality of the first extended optical data unit ODUe₁₂ transported over a point-to-point connection between an input network element and an output network element of the OTN, passing across a plurality of OTN elements.

Therefore, the first frame 11₁ of the first extended optical data unit ODUe₁₂ comprises a field 11_{1b} which contains the data of the first plesiochronous signal E1 and comprises a field 11₁ₐ which contains said path overhead.

In particular, the path overhead field 11₁ₐ comprises at least one byte for implementing the following monitoring functions:
- monitoring the error rate of the network connection carrying the frame of the first extended optical data unit ODUe₁₂;
- identifying unequipped signals, i.e. signals not belonging to any path source;
- identifying possible erroneous path connections (i.e. a path termination is connected to an incorrect source);
- reporting to the remote transmitter (path source) the occurrence of path errors detected at the receiver (path terminator), indicated as "Backward Error Indication" (BEI) in standard ITU-T G.709;
- reporting to the remote transmitter (path source) the occurrence of path failures detected at the receiver (path terminator), indicated as "Backward Defect Indication" (BDI) in standard ITU-T G.709.

Analogously, the data 10₂ of the second plesiochronous signal E1 are mapped into a second frame 11₂ of the first extended optical data unit ODUe₁₂ (step 2-1a illustrated above) and the path overhead field is added (step 2-1b illustrated above), analogously to what was previously illustrated in relation to the first frame of the first extended optical data unit ODUe₁₂; therefore, the second frame 11₂ of the first extended optical data unit ODUe₁₂ comprises a field 11_{2b} which contains the data of the second plesiochronous signal E1 and comprises a field 11₂ₐ which contains said path overhead.

The process illustrated above is further repeated an additional 534 times up to the data 10₅₃₆ of the 536th plesiochronous signal E1, which is mapped into the 536th frame 11₅₃₆ of the first extended optical data unit ODUe₁₂ (step 2-1a illustrated above) and respective path overhead fields are then added (step 2-1b illustrated above), analogously to what was previously illustrated in relation to the first frame of the first extended optical data unit ODUe₁₂; therefore, the 536th frame 11₅₃₆ of the first extended optical data unit ODUe₁₂ comprises a field 11_{536b} which contains the data of the 536th plesiochronous signal E1 and comprises a field 11₅₃₆ₐ which contains the path overhead.

Afterwards the 536 frames of the first extended optical data unit ODUe₁₂ are time division multiplexed (steps 2-1c and 2d illustrated above) into a group composed of four consecutive multiplexed frames 50, together with 536 respective values of a pointer field distributed over three of the four bytes hereinafter indicated as V1, V2, V3, V4, one for each multiplexed frame 50 repeated 4 times.

Said pointer field is representative of the starting position of the respective frame of the first extended optical data unit ODUe₁₂ inside the frame of the level 0 Optical Channel Data Unit (ODUO) and allows the 536 frames of the first extended optical data unit ODUe₁₂ (which are generated in different source network elements having an equal nominal frequency of the local clock signal, but which are not necessarily synchronous with one another) to move relative to the level 0 Optical Channel Data Unit (ODUO) of the aggregated signal transported across the OTN: there will thus be 536 different values independent of the pointer field, one for each first extended optical data unit ODUe₁₂.

The multiplexed frame 50 is obtained by "byte interleaving" the first byte of the 536 pointer fields V1 and the bytes of the 536 frames 11₁, 11₂, ... 11₅₃₆ of the first extended optical data unit ODUe₁₂, and further adding 9 rows, each one composed of 4 bytes for restricted use.

Therefore, a group of four multiplexed frames 50 carries the 536 frames of the first extended optical data unit ODUe₁₂, together with 536 respective bytes V1, V2, V3, V4, wherein the first three V1, V2, V3 carry the pointer.

Figures 2A-2B show the process of generating a possible multiplexed frame 50, in the case of reception, at the input of the OTN, of the plurality of digital signals S₁ carrying 536 E1 type plesiochronous digital signals.

It is possible to observe that the multiplexed frame 50 is composed of 9 rows, wherein each row is composed of 2,148 bytes.

For the purpose of explaining the invention, the multiplexed frame 50 is considered to have a time length equal to 125 microseconds (that is a frequency of 8 KHz), that is, equal to the time length of the SDH frame: in this manner it is possible to guarantee the same performance as the SDH in terms of the speed of the alignment process and in terms of the capacity to detect the error rate.

In particular, the multiplexed frame 50 comprises the following fields:
- the first 4 columns, which are bytes for restricted use;
- columns 5 to 2148, which carry the bytes of the 536 frames 11₁, 11₂, ... 11₅₃₆ of the first extended optical data unit ODUe₁₂.

In particular, the columns from 5 to 2148 are in turn divided into 4 equal portions:
- a first portion composed of 536 columns, one for each of the 536 frames of the first extended optical data unit ODUe₁₂, in particular from column 5 to column 540;
- a second portion composed of 536 columns, one for each of the 536 frames of the first extended optical data unit ODUe₁₂, in particular from column 541 to column 1076;
- a third portion composed of 536 columns, one for each of the 536 frames of the first extended optical data unit ODUe₁₂, in particular from column 1077 to column 1612;
- a fourth portion composed of 536 columns, one for each of the 536 frames of the first extended optical data unit ODUe₁₂, in particular from column 1613 to column 2148.

Therefore, the bytes of the 536 frames of the first extended optical data unit ODUe₁₂ are multiplexed into each portion of the multiplexed frame 50 by "byte interleaving" the bytes of the 536 frames of the first extended optical data unit ODUe₁₂, i.e.:
- a first byte is selected in succession from each of the 536 frames of the first extended optical data unit ODUe₁₂ and the 536 selected bytes are mapped into the first row of the first portion of the multiplexed frame 50;
- a second byte is selected in succession from each of the 536 frames of the first extended optical data unit ODUe₁₂ and the 536 selected bytes are mapped into the second row of the first portion of the multiplexed frame 50;
- and so on until row number 9, in which a 9th byte is selected in succession from each of the 536 frames of the first extended optical data unit ODUe₁₂ and the 536 selected bytes are mapped into row number 9 of the first portion of the multiplexed frame 50.

Analogous considerations can be put forward for the second, third and fourth portions of the multiplexed frame 50.

It is possible to observe that the first portion of the multiplexed frame 50 comprises, in the first row, the 536 bytes (from byte number 5 to number 540) V1, one for each of the 536 frames of the first extended optical data unit ODUe₁₂, which, combined with the bytes V2, V3, defines the starting position of the respective frame of the first extended optical data unit ODUe₁₂.

The values of the pointers are variable and change depending on the position of the respective frame of the first extended optical data unit ODUe₁₂ inside the multiplexed frame 50.

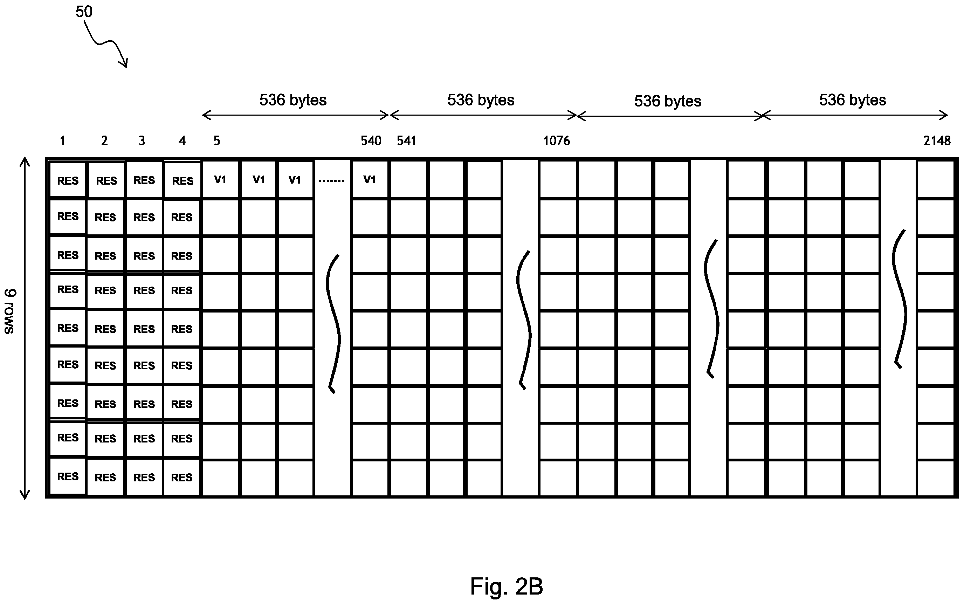

For example, said position is expressed as an integer value of the distance (measured in bytes) between a reference byte taken at the end of the pointer field (i.e. bytes from number 5 to 540 of the first row of the multiplexed frame 50 of Figure 2B) and the first byte of the respective frame of the first extended optical data unit ODUe₁₂.

The reference byte is preferably the byte V2 inside the group of four consecutive multiplexed frames 50 and thus the pointers have values that refer to the byte V2 of each first extended optical data unit ODUe₁₂.

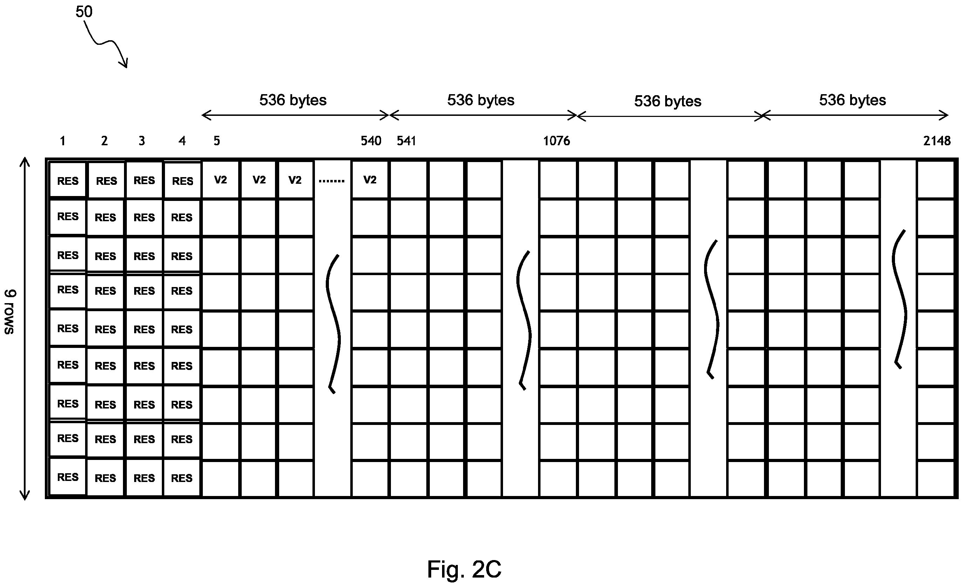

Figure 2C differs from Figure 2B in that the multiplexed frame 50 comprises 536 bytes of the second byte V2 (instead of V1) of the pointer field, from byte 5 to byte 540 of the first row.

Analogously:
- a third multiplexed frame 50 (not shown in the Figures) comprises 536 bytes of the third byte V3 of the pointer field, from byte 5 to byte 540 of the first row;
- a fourth multiplexed frame 50 (not shown in the Figures) comprises 536 bytes of the fourth byte V4, from byte 5 to byte 540 of the first row.

In other words:
- the value of the bytes V1, V2 of row 1, column 5 represents the position of the first byte of the frame of the first extended optical data unit ODUe₁₂ number 1 in the level 0 Optical Channel Data Unit (ODUO) (in the example considered, it is an integer value that represents the distance in bytes between the byte V2 and the first byte of the frame of the first extended optical data unit ODUe₁₂ number 1);
- the value of the bytes V1, V2 of the row 1, column 6 represents the position of the first byte of the frame of the first extended optical data unit ODUe₁₂ number 2 in the level 0 Optical Channel Data Unit (ODUO) (in the example considered, it is an integer value that represents the distance in bytes between the byte V2 and the first byte of the frame of the first extended optical data unit ODUe₁₂ number 2);
- and so on up to the value of the byte V1 of row 1, column 540, which represents the position of the first byte of the frame of the first extended optical data unit ODUe₁₂ number 536 in the level 0 Optical Channel Data Unit (ODUO) (in the example considered, it is an integer value che represents the distance in bytes the byte V2 and the first byte of the frame of the first extended optical data unit ODUe₁₂ number 536).

It should be noted that Figure 2B shows a possible structure of the multiplexed frame 50 in the case of reception, at the input, of 536 plesiochronous digital signals E1, but different structures of the multiplexed frame 50 can be defined, depending on the type and number of input digital signals, provided that the multiplexed frame 50 contains a plurality of frames of the first/second/third extended optical data units ODUe₁₂, ODUe₃, ODUe₄, each such as to encapsulate a single low bit rate input digital signal together with the respective path overhead.

For example, in the case of the reception of 24 plesiochronous digital signals of the E3 type and mapping into 24 respective frames of the second extended optical data unit ODUe₃, the multiplexed frame 50 is composed of 9 rows, wherein each row is composed of 2,148 bytes and the multiplexed frame 50 is thus such as to transport 24 frames of the second extended optical data unit ODUe₃.

In this case the frame of the second extended optical data unit ODUe₃ differs from that of the first extended optical data unit ODUe₁₂ in that the columns from 13 to 2148 are divided into 89 equal portions, each composed of 24 columns, so that the bytes of 24 frames of the second extended optical data unit ODUe₃ are mapped into the multiplexed frame 50 by "byte interleaving" the bytes of the 24 frames of the second extended optical data unit ODUe₃.

With reference to Figure 3A, it shows the structure of the frame 51 of a level 0 Optical Channel Payload Unit (abbreviated hereinafter as OPUO) according to the invention, in the example considered of the reception of 536 plesiochronous input digital signals E1.

The structure of the OPUO frame 51 is organised in 4 rows, each one composed of 3,808 bytes of payload and 2 bytes of overhead as defined in standard ITU-T G.709, but the content of the OPUO frame 51 is new.

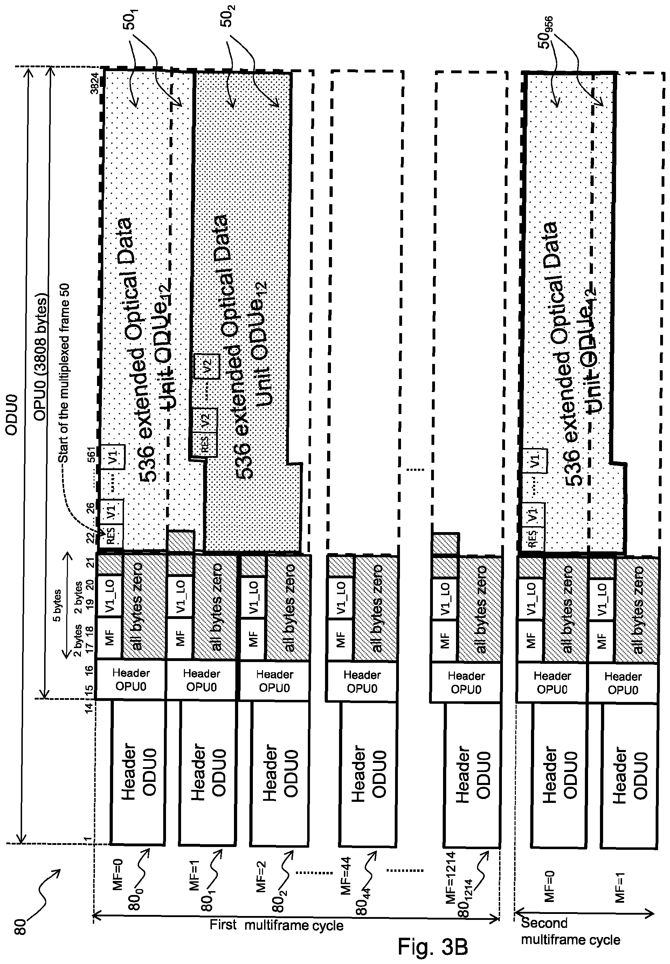

In particular, the OPUO frame 51 is composed of the following portions:
- row 1, bytes number 17 and 18: MF field having the function of implementing a multi-frame counter, having integer values comprised between 0 and 1,214;
- row 1, byte number 22 (I-R field): it can be a byte of information or a filler byte, depending on the value of the multi-frame counter MF;
- row 2 to row 4, each from byte number 17 to byte number 21: the values of the filler bytes are set equal to a predefined value, for example all '0';
- a portion organised in 4 rows, each one composed of bytes number 15 and 16, which carry the overhead of OPUO, as defined by standard ITU-T G.709;
- a portion (indicated as a hatched area) composed of 3,808 x 4 -20= 15,212 bytes or 3,808 x 4 -21= 15,211 bytes depending on the information/filler value of the field I-R, arranged in 4 rows, each row composed of byte number 17 to byte number 3824, which carries at least a part of the previously illustrated multiplexed frame 50, as will be explained in greater detail below in relation to the description of Figure 3B.

The OPUO overhead preferably comprises a field indicating the type of mapping to be chosen among those intended for proprietary use under standard ITU-T G.709, i.e. in the interval (base 16) between 80 and 8F; for example, said field is a byte having a value equal to 80 in the hexadecimal base (i.e. bit values equal to 10000000).

Advantageously, the OPUO frame 51 further comprises a field V1_LO indicating the start of the multiplexed frame 50 (and thus of the position of the byte V1 or V2, V3, V4 in the example considerate of the transport of E1/VC12 type services): the presence of the field V1_LO makes it possible to accelerate, during reception, the process of alignment of the first extended optical data unit ODUe₁₂ after the level 0 Optical Channel Data Unit (ODUO) has been aligned, as will be explained in greater detail below in relation to the description of Figure 3B.

It should be noted that it may occur that the first byte of the multiplexed frame 50 is not present inside a multiplexed frame 50; in this case the field V1_LO will have a predefined value indicating that the start of the multiplexed frame 50 is missing in the current frame of the level 0 Optical Channel Data Unit (ODUO).

Alternatively, the absence of the first byte of the multiplexed frame 50 is represented with the field V1_LO which contains a value greater than the size of the payload area of the OPUO frame 51 (i.e. a value indicating a position of the next OPUO frame 51), as will be explained in greater detail below.

The field V1_LO preferably occupies row 1, bytes number 5 and 6 of the OPUO frame 51.

With reference to Figure 3B, it shows a plurality of possible frames 80₀, 80₁, 80₂, ... 80₁₂₁₄ of the level 0 Optical Channel Data Unit (indicated briefly as ODUO), each one having a structure as defined by standard ITU-T G.709.

The structure of the multiplexed frame 50 is chosen in such a way that the length, in time, of 956 multiplexed frames 50 is equal to the length, in time, of 1215 ODUO frames.

In particular, each multiplexed frame 50 is composed of 9 rows and 2,148 columns, i.e. a total of 9 x 2,148= 19,332 bytes; furthermore, it is known from standard ITU-T G.709 that each frame OPUO has a payload area composed of 15,232 bytes.

The 956 multiplexed frames 50 together occupy 956 x 19,332= 18,481,392 bytes, whilst the payload area of 1,215 frames OPUO occupies 1,215 x 15,232= 18,506,880 bytes altogether; the difference is 25,488 bytes, which can be rewritten as 27 * (44*21+1**20*): therefore, *20* filler bytes are added to every 45 ODUO frames 80₀, 80₁, 80₂, ... 80₁₂₁₄, 21 filler bytes are added to every 44 of 45 ODUO frames so as to obtain, precisely, a length, in time, of 956 multiplexed frames 50 equal to the length, in time, of 1215 ODUO frames.

Therefore it is possible to define a multi-frame cycle composed of 1,215 consecutive ODUO frames 80₀, 80₁, 80₂, ... 80₁₂₁₄, whose payload area coincides with the set of 956 multiplexed frames 50; each ODUO frame of the multi-frame cycle is identified by the value of the previously indicated multi-frame counter MF.

In particular, Figure 3B shows a first multi-frame cycle composed of frames 80₀, 80₁, 80₂, ... 80₁₂₁₄ in its entirety and only partially shows a second multi-frame cycle following the first.

It is possible to observe that each of the ODUO frames 80₀, 80₁, 80₂, ... 80₁₂₁₄ of the first multi-frame cycle comprises the following fields:
- a level 0 Optical Channel Payload Unit (OPUO) organised in 4 rows, each composed of 3808 bytes and 2 bytes of overhead, which carries at least a part of the 536 frames of the first extended optical data unit ODUe₁₂;
- an ODUO overhead organised in 3 rows, each one composed of 14 bytes, as defined by standard ITU-T G.709.

It is important to observe that the OPUO field comprises a portion of the multiplexed frame 50, which in turn carries 536 frames of the first extended optical data unit ODUe₁₂.

For example, Figure 3B shows that a first multiplexed frame 50₁ (indicated with a dot pattern) is carried by the ODUO frame indicated as 80₀ having MF=0 and by the next contiguous ODUO frame indicated as 80₁ having MF=1; analogously, Figure 3B shows that a second multiplexed frame 50₂ (indicated with a tighter dot pattern) is carried by the ODUO frame 80₁ having MF=1 and by the next contiguous ODUO frame indicated as 80₂ having MF=2.

The ODUO frame 80₁ having MF=1 thus carries a portion of the first multiplexed frame 50₁ and a portion of the second multiplexed frame 50₂.

Therefore, the start of the multiplexed frame 50 is not constant inside the ODUO frame, as the value of the multi-frame counter MF inside a multi-frame cycle varies; in other words, a continuous sliding occurs between the multiplexed frame 50 and the ODUO frame since the start of the multiplexed frame 50 shifts within the ODUO frame.

Consequently, it is necessary to identify the start of the multiplexed frame 50 inside the ODUO frame, that is, the position of byte number 1 of row 1 of the structure 50 of Figures 2B-2C, as will be explained in greater detail below.

In contrast, no continuous sliding occurs between a multi-frame cycle (composed of 1,215 ODUO frames) and a set of 956 multiplexed frames 50, since the length, in time, of 1,215 consecutive ODUO frames is equal to the length, in time, of 956 consecutive multiplexed frames 50 as previously illustrated; therefore, the start of the structure composed of 956 multiplexed frames 50 (and thus the position of the 536 bytes V1 and, analogously, of the 536 bytes V2/V3/V4) is repeated equal after a multi-frame cycle composed of 1,215 consecutive ODUO frames, that is, the position of a given byte V1, V2, V3, V4 is always the same for a given value of the multi-frame counter MF (Figure 3B shows, for example, that the byte V1 is in the ODUO frame having MF=1 of the first and second multi-frame cycles).

It should be noted that the case considered in Figures 2A-2C and 3A-3B is one in which a level 0 Optical Channel Data Unit (ODUO) is entirely filled by 536 frames of the first extended optical data unit ODUe₁₂, but it is also possible for the first extended optical data unit ODUe₁₂ to have fewer than 536 frames and thus the ODUO frame will be filled only partially.

The start of the multiplexed frame 50 inside the ODUO frame can be determined according to different solutions.

A first solution is to use only the multi-frame counter MF having values comprised between 0 and 1,215.

In this case, since the structure of the multiplexed frame 50 is repeated equal in every multi-frame cycle, it is possible to determine the position of a byte V1 (or V2, V3, V4) by waiting for the respective value of the multi-frame counter.

For example, Figure 3B shows that the position of the first byte of the multiplexed frame 50 is always the same (namely, row 1, column 22) when the multi-frame counter MF= 0.

A second solution for identifying the start of the multiplexed frame 50 is to use once again the multi-frame counter MF and exploit the fact that the multiplexed frame 50 is synchronous and has a fixed, repetitive structure with respect to OPUO: this enables a formula to be determined which uniquely associates the value of the multi-frame counter MF with the start of each multiplexed frame 50, taking into consideration that the multiplexed frame 50 slides inside the ODUO frame and it is thus possible for a situation to occur in which the start of a multiplexed frame 50 is not present within a particular ODUO frame in a multi-frame cycle.

It is thus possible to construct (in the example considered of the transport of E1/VC12 type services) a table composed of 1,215 rows, each row composed of 2 bytes, wherein the position (expressed, for example, in row-column coordinates) of the first byte of the multiplexed frame 50 is memorised in the table for each row and, furthermore, a flag is memorised for each row to indicate whether the multiplexed frame 50 includes the bytes V1 or does not include the bytes V1 (or includes the bytes V2, V3, V4).

A third solution for identifying the start of the multiplexed frame 50 is to use the field V1_LO of the OPUO frame 51, wherein said field V1_LO contains an explicit address - expressed in row-column coordinates - of the position of the start of the multiplexed frame 50 and further contains a flag having a value of True or False to indicate, respectively, whether the multiplexed frame 50 includes the bytes V1 or does not include the bytes V1 (or includes the bytes V2, V3, V4).

Let's consider once again the example illustrated in Figure 3B in relation to the transport of 536 E1/VC12 services and let's suppose we start with the value 1 for the row-column coordinates of the field V1_LO:
- when MF= 0, V1_LO contains coordinates (row, column) = (1, 22) and the flag = True;
- when MF= 1, V1_LO contains coordinates (row, column) = (2, 339) and the flag = False;
- when MF = 2, V1_LO contains coordinates (row, column) = (3, 657) and the flag = False;
- when MF = 44, V1_LO contains coordinates (row, column) = (2, 3554) and the flag = False;
- when MF = 1,214, V1_LO contains coordinates (row, column) = (-, 4096) and the flag = False, wherein the value '-' represents the case in which the start of the multiplexed frame 50 is not present in the current frame of the level 0 Optical Channel Data Unit (ODUO).

A fourth solution for identifying the start of the multiplexed frame 50 is to use once again the field V1_LO of the OPUO frame 51, wherein, however, said field V1_LO contains an explicit address - expressed as a number of bytes or displacement - between the start of the payload area of the OPUO frame 51 and the position of the start of the multiplexed frame 50; in other words, the field V1_LO can be seen a pointer at the start of the multiplexed frame 50.

In this case, a higher value of the size of the payload area of the current OPUO frame 51 is indicative of an OPUO frame 51 in which the first byte of the multiplexed frame 50 does not appear.

Let us consider once again the example illustrated in Figure 3B in relation to the transport of 536 E1/VC12 services and let us suppose we start with the value 0 for the number of bytes in the field V1_LO:
- when MF = 0, V1_LO = 0
- when MF = 1, V1_LO = 4,120;
- when MF = 2, V1_LO = 8,241;
- when MF = 3, V1_LO = 12,362;
- when MF = 4, V1_LO = 16,843; value out of range (0÷M5,210): it represents the case in which the start of the multiplexed frame 50 is not present in the current frame of the level 0 Optical Channel Data Unit (ODUO);
- when MF = 44, V1_LO = 7,335;
- when MF = 1,214, V1_LO = 15,211 value out of range (0÷15,210): it represents the case in which the start of the multiplexed frame 50 is not present in the current frame of the level 0 Optical Channel Data Unit (ODUO).

The second, third and fourth solutions are particularly advantageous because they allow to decreas considerably the time taken to carry out the alignment of the plurality of frames of the first/second/third extended optical data units ODUe_{12/}ODUe_{3/}ODUe₄ relative to the Level 0 Optical Channel Data Unit (ODUO), because for each ODUO frame it is possible to immediately determine the start of the multiplexed frame 50.

Said reduction in the alignment time is necessary in the event of intervention of network protection at the level of the path of the frame of the first/second/third extended optical data units ODUe_{12/}ODUe_{3/}ODUe₄, such as, for example, protections analogous to the SNCP of the SDH standard.

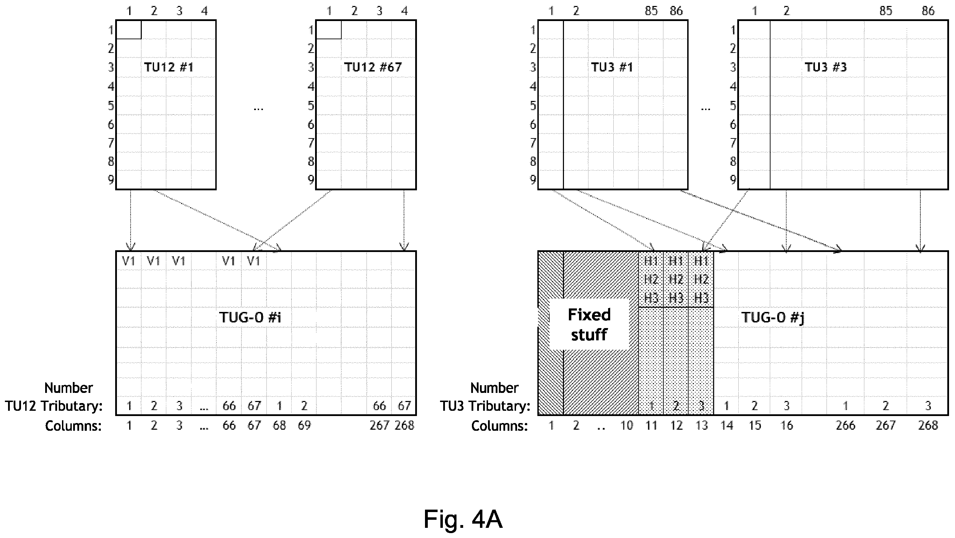

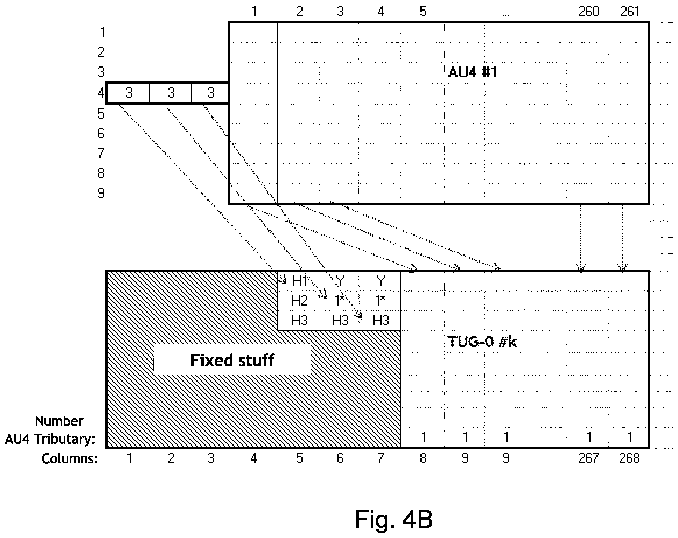

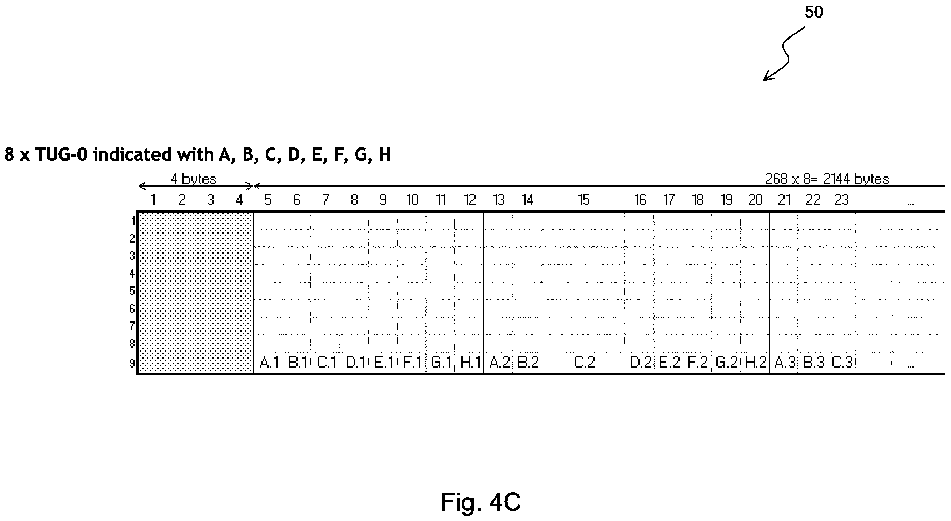

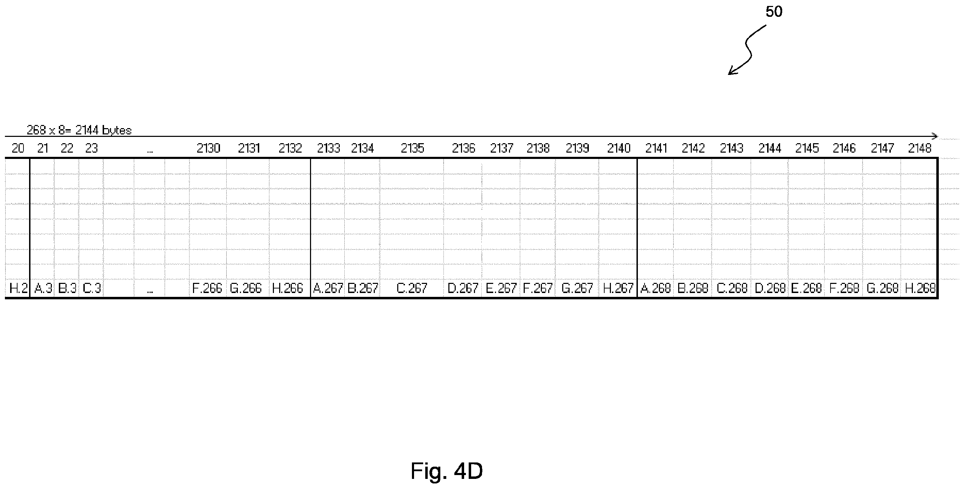

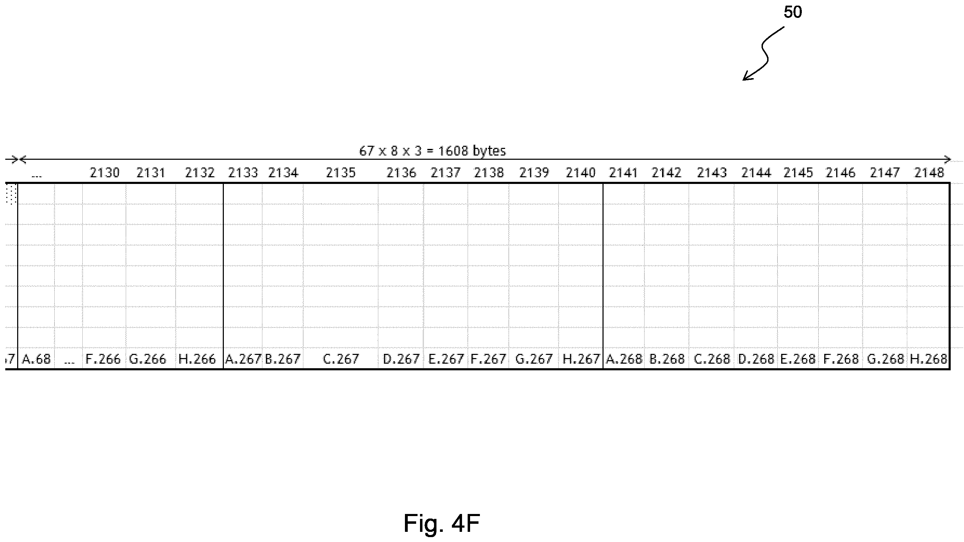

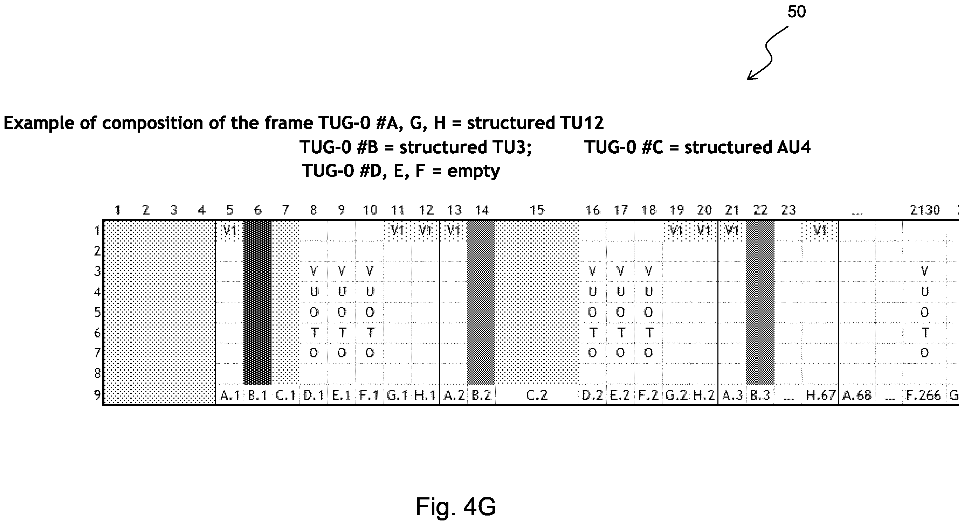

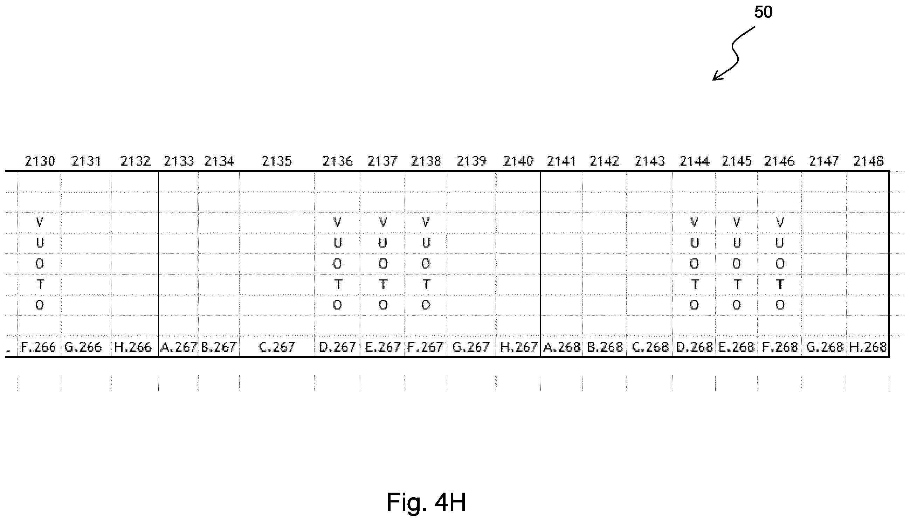

According to a first variant of the invention shown in Figures 4A-4H, the mapping method comprises mapping digital signals of various types of services: in this manner the level 0 Optical Channel Data Unit is capable of transporting (across the Optical Transport Network OTN) a plurality of frames of the first/second/third extended optical data units ODUe_{12/}ODUe_{3/}ODUe₄ generated from a plurality of digital signals of various types of services, such as, for example:
- transport of plesiochronous signals E1, E3, E4;
- transport of Virtual Containers of the VC12, VC3, VC4 type.

According to the first variant of the invention, the multiplexed frame 50 is organised as a set of frames of Tributary Unit Groups of order 0 (indicated as TUG-0 frames) which occupy fixed, defined positions inside the multiplexed frame 50, wherein the frame TUG-0 is composed of 9 rows and 268 columns.

The multiplexed frame 50 (composed of 9 rows, each one composed of 2148 columns) is obtained by byte-interleaving 8 TUG-0 frames inside the payload of the multiplexed frame 50, wherein the 8 TUG-0 frames have a fixed phase relative to the start of the multiplexed frame 50.

The multiplexed frame 50 is thus formed by two or more groups, wherein:
- different groups carry frames of the first/second/third extended optical data units ODUe_{12/}ODUe_{3/}ODUe₄ generated from a plurality of digital signals of different types of services;
- a same group carries a plurality of extended optical data units generated from a plurality of digital signals of services of the same type (i.e. every group is homogeneous).

For example, Figures 4A-4D show an example wherein the mapping method generates a multiplexed frame 50 divided into 8 groups, wherein each group can carry:
- 67 frames of the first extended optical data unit ODUe₁₂ generated from 67 respective Virtual Containers VC12; or
- 22 frames of the first extended optical data unit ODUe₁₂ generated from 22 respective Virtual Containers VC2; or
- 3 frames of the second extended optical data unit ODUe₃ generated from 3 respective Virtual Containers VC3; or
- a frame of the third extended optical data unit ODUe₄ generated from a Virtual Container VC4.

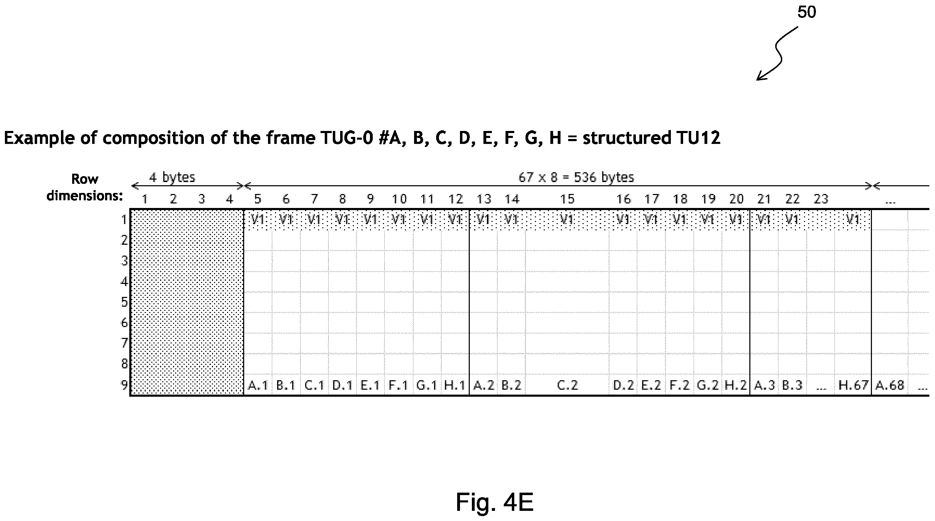

Figures 4E-4H instead show two examples of the first variant of the invention, wherein the multiplexed frame 50 is formed, respectively, by:
- eight TUG-0 frames, each carrying Tributary Units of the TU12 type;
- eight TUG-0 frames, wherein three TUG-0s (indicated as A, G, H) carry Tributary Units of the TU12 type, one TUG-0 (indicated as B) carries Tributary Units of the TU3 type, one TUG-0 (indicated as C) carries an Administrative Unit of the AU4 type, whereas three TUG-0s (indicated as D, E, F) are not used.

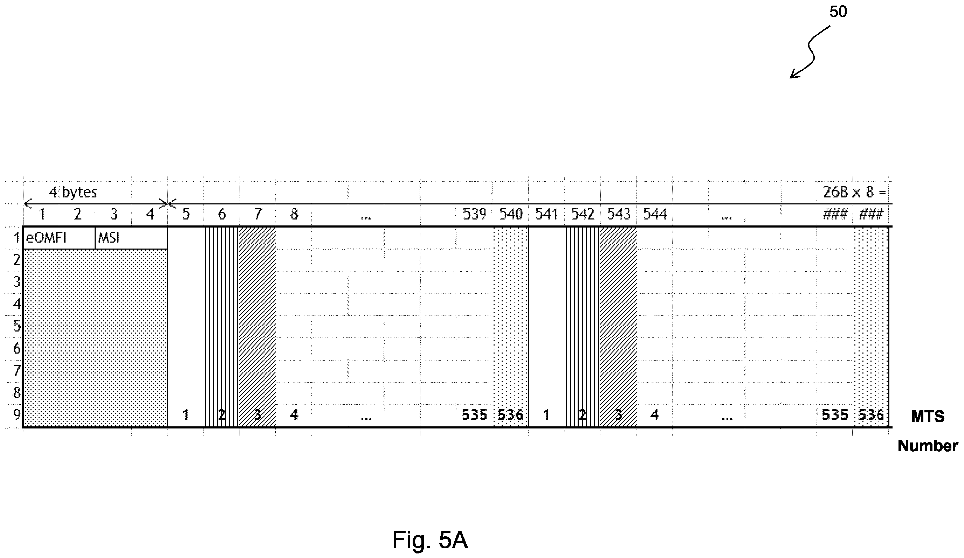

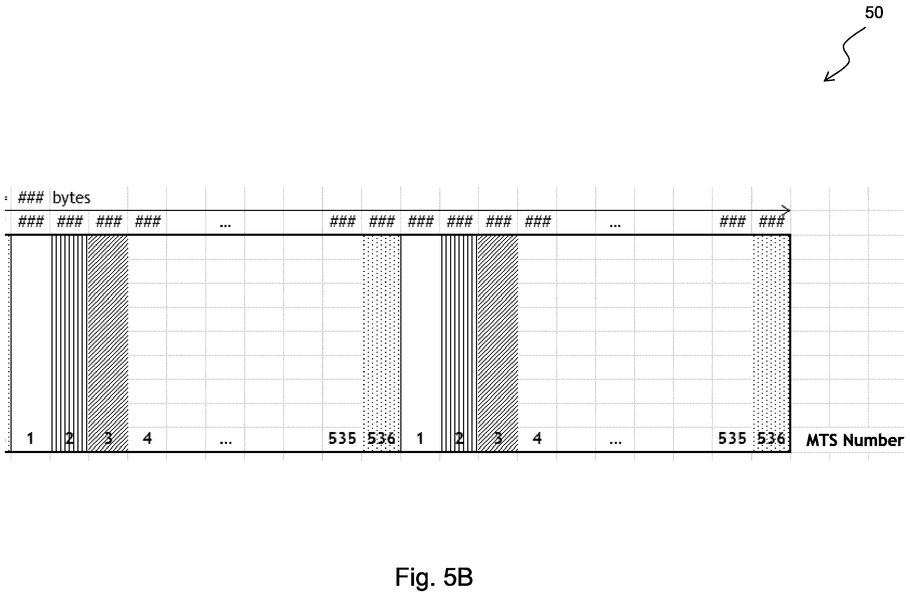

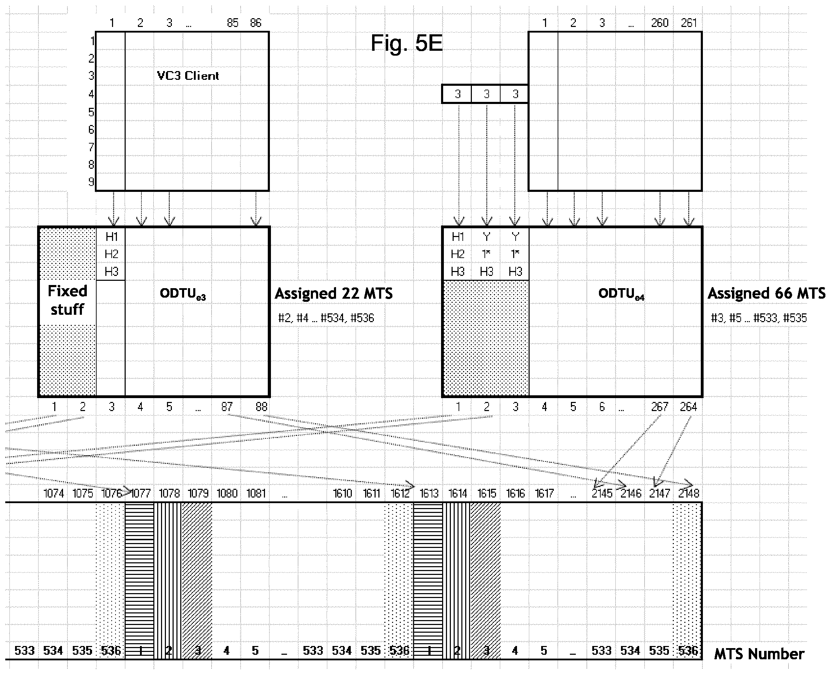

With reference to Figures 5A-5E, they show the method for mapping digital signals of different types of services according to a second variant of the invention, which has the advantage (compared to the first variant) of reducing the bandwidth fragmentation.

Based on the second variant of the invention, the multiplexed frame 50 is divided into very small time slots indicated as "Micro Tributary Slots" (abbreviated hereinafter as MTS), whose size is exactly configured for mapping and carrying the frame of the first extended optical data unit ODUe₁₂ having the smallest size, for example associated with lower order Virtual Containers VC12.

For example, let's consider the previously illustrated multiplexed frame 50 composed of 9 rows and 2,148 columns; in this case a MTS is composed of 9 rows and 4 columns of the multiplexed frame 50, i.e. the number of rows of an MTS is equal to the number of rows of the multiplexed frame 50.

Therefore the multiplexed frame 50 (composed of 9 rows, each one composed of 2,148 columns) is obtained by byte-interleaving 536 MTS inside the area intended for the payload of the multiplexed frame 50.

Figures 5A-5B show how the MTS are distributed inside the multiplexed frame 50 from column 5 to column 2,148 and each of them occupies 1/536 (equal to about 0.187%) of the available capacity.

Inside the multiplexed frame 50, the different frames of the first/second/third extended optical data units ODUeₙ (n= 12, 3, 4) will have a suitable number of MTS assigned to them, equal to:
- 1 MTS (equal to 4 columns of the multiplexed frame 50) for carrying the first extended optical data tributary unit ODTUe₁₂ associated with a lower order Virtual Container VC12;
- 22 MTS (equal to 88 columns of the multiplexed frame 50, 2 of which are fillers) for carrying the second extended optical data tributary unit ODTUe₃ associated with a higher order Virtual Container VC3;
- 66 MTS (equal to 264 columns of the multiplexed frame 50) for carrying the third extended optical data tributary unit ODTUe₄ associated with a higher order Virtual Container VC4.

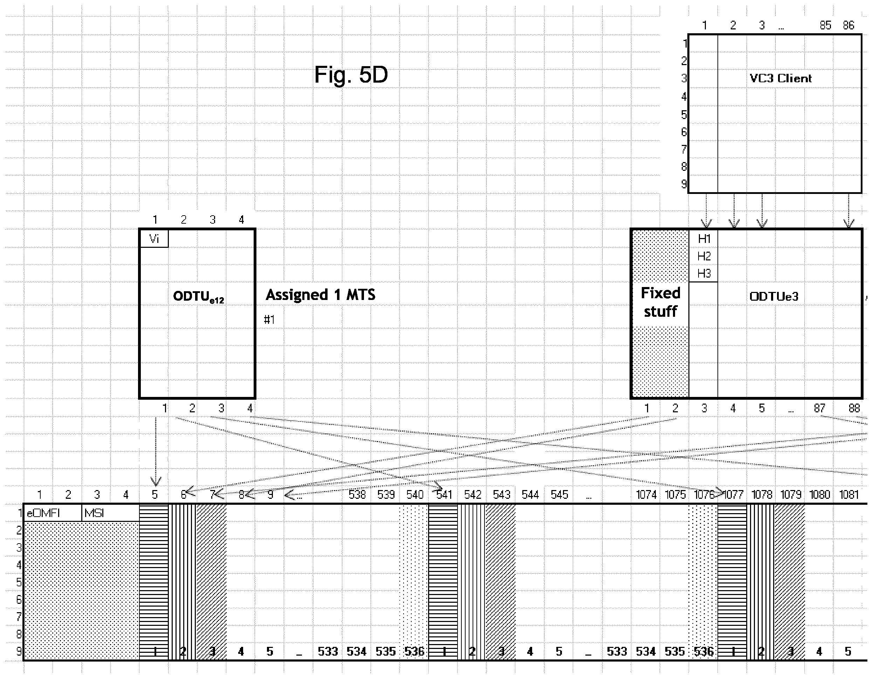

The MTS necessary for carrying a generic extended optical data tributary unit ODTUeₙ (n=12, 3, 4) are taken arbitrarily from the group of MTS that have remained unutilised; for example, where i, ii, ... xxii is the sequence of 22 MTS assigned to a ODTUe₃, the only condition that needs to be met is that MTS_1 ≤ i < ii < ... < xxii ≤ MTS_536 (see for example, Figures 5D-5E).

This arbitrariness in the assignment of MTS allows to avoid the inefficiencies due to problems of bandwidth fragmentation, which can manifest themselves with more rigid rules (as occurs, for example, in SDH with the division into Tributary Unit Groups - TUG - of the higher order Virtual Container VC4).

In particular, the number of MTS assigned to the frames of the first/second/third extended optical data units ODUeₙ (n= 12, 3, 4) is chosen according to a consecutive increasing order, starting from the lowest available number of MTS.

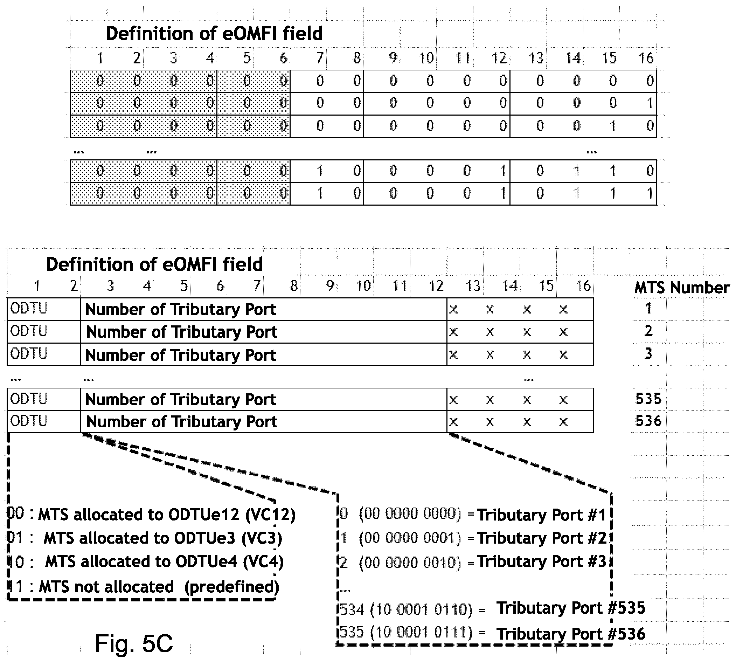

The structure of the multiplexed frame 50 is defined by means of the following two fields shown in Figure 5C and situated inside the area of overhead of the multiplexed frame 50 itself:
- MSI (multiplex structure identifier): it contains a value that indicates the description of the content of each of the 536 MTS. A pair of bytes is assigned to every MTS (2 bits are used to describe the type of load carried, 10 bits are used to identify the port carried);
- eOMFI (extended OPU multi-frame indicator): it is a 536 module counter used to define a multi-frame of length 536, wherein every value of the counter is associated with a corresponding MTS with its descriptor MSI.

In order to speed up the detection of an alarm of discrepancy in the content of the field MTS, it is possible to shorten the cycle of the eOMFI multi-frame, for example by dividing it by 8 and assigning 8 MSI fields to 8 MTS per multiplexed frame 50: in this manner the eOMFI field would occupy a single byte, preferably the first of the multiplexed frame 50, and the 8 MSI preferably the bytes 3-4 of the first 8 rows.

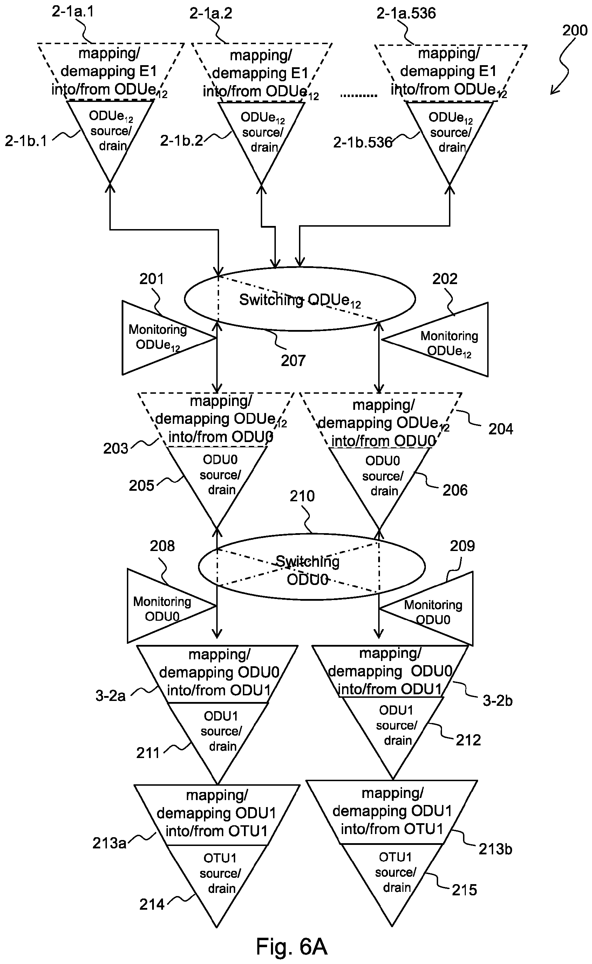

With reference to Figure 6A, it shows a block diagram of a functional model of a network element 200 which implements a first embodiment of the invention, wherein 536 plesiochronous digital signals E1 are inserted in the optical transport OTN and transported across it.

The network element 200 comprises 536 input modules for receiving 536 respective plesiochronous input digital signals E1.

The 536 input modules can be implemented with 536 respective input ports, each one implementing a respective input module; alternatively, the 536 input modules can be implemented with a plurality of input ports, each one comprising one or more printed circuit boards, each one implementong one or more input modules (for example, each board manages 63 interfaces of signals E1).

For the sake of simplicity, it is further considered that the network element 200 comprises two output modules for transmitting the output digital signals of the Optical Transport Network.

The two output modules can be implemented with two respective output ports or a single output port which comprises two printed circuit boards, each one implementing a respective output module.

The first input module comprises the function 2-1a.1 which performs the mapping of the first digital plesiochronous signal E1 into a first frame of the first extended optical data unit ODUe₁₂, as explained previously in relation to the description of Figures 1A, 1C and 2A; in the function 2-1a.1 it is also carried out the demapping of the first digital plesiochronous signal E1 from the first frame of the first extended optical data unit ODUe₁₂.

The first input module further comprises a function 2-1b.1 which performs the functions of source and drain termination for the first frame of the first extended optical data unit ODUe₁₂, i.e. addition, extraction and processing of the path overhead of the first extended optical data unit ODUe₁₂.

Analogously, the second input module comprises:
- the function 2-1a.2, which performs the mapping of the second digital plesiochronous signal E1 into a second frame of the first extended optical data unit ODUe₁₂ and performs the demapping of the second digital plesiochronous signal E1 from the second frame of the first extended optical data unit ODUe₁₂;
- the function 2-1b.2, which performs the functions of source and drain termination for the second frame of the first extended optical data unit ODUe₁₂, i.e. addition, extraction and processing of the path overhead of the first extended optical data unit ODUe₁₂.

The previous considerations are repeated in an analogous manner from the third to the 536th input modules, the latter having the functions 2-1a.536, 2-1b.536 analogous to 2-1a.1, 2-1b.1, respectively.

The function 207 performs a switching between the 536 frames of the first extended optical data unit ODUe₁₂.

In other words, the function 207 allows to perform an exchange of the positions (understood as time slots of the time division multiplexed signal) of one or more of the 536 frames of the first extended optical data unit ODUe₁₂, for example between a frame of the first extended optical data unit ODUe₁₂ of the first input module and a frame of the first extended optical data unit ODUe₁₂ addressed to the first or second output module.

The functions 201, 202 perform a non-intrusive monitoring of the path of each frame of the first extended optical data unit ODUe₁₂.

The network element 200 further comprises the function 203, which performs the mapping of the frame of the first extended optical data unit ODUe₁₂ into the level 0 Optical Channel Payload Unit (OPUO) and further performs the multiplexing of the level 0 Optical Channel Payload Unit (OPUO) into the Level 0 Optical Channel Data Unit (ODUO), as explained previously in relation to the description of Figures 1A, 1C and 3A-3B.

Moreover, in the function 203 it is performed the demultiplexing of the level 0 Optical Channel Payload Unit (OPUO) from the Level 0 Optical Channel Data Unit (ODUO) and, furthermore, it is performed the demapping of the frame of the first extended optical data unit ODUe₁₂ from the level 0 Optical Channel Payload Unit (OPUO).

The network element 200 further comprises a function 205 which performs the functions of source and drain termination for the level 0 Optical Channel Data Unit (ODUO), i.e. addition, extraction and processing, respectively, of the overhead of the level 0 Optical Channel Data Unit (overhead of ODUO).

The functions 204, 206 of the network element 200 are analogous to the functions 203, 205, respectively.

The functions 208, 209 perform the monitoring of the level 0 Optical Channel Data Unit (ODUO).

The function 210 performs a switching between the frames 80 of the level 0 Optical Channel Data Unit (ODUO).

In other words, the function 210 allows to perform an exchange of the positions (understood as time slots of the time division multiplexed signal) of the level 0 Optical Channel Data Unit (ODUO), for example between the level 0 Optical Channel Data Unit (ODUO) of an input module and the first/second output module.

The first output module comprises a function 3-2a performing the mappinf of two frames of the level 0 Optical Channel Data Unit (ODUO) into a frame of the level 1 Optical Channel Data Unit (ODU1), as previously explained in relation to the description of step 3-2a of Figure 1A.

Moreover, in the function 3-2a it is performed the demapping of the two frames of the level 0 Optical Channel Data Unit (ODUO) from the frame of the level 1 Optical Channel Data Unit (ODU1).

The first output module further comprises a function 211 which performs the functions of source and drain termination for the level 1 Optical Channel Data Unit (ODU1), i.e. addition and extraction, respectively, of the overhead of the level 1 Optical Channel Data Unit (overhead of ODU1).

The functions 3-2b, 212 of the second output module are analogous to the functions 3-2a, 211, respectively, of the first output module.

The first output module comprises a function 213a which performs the mapping of the frame of the level 1 Optical Channel Data Unit (ODU1) into a frame of the level 1 Optical Channel Transport Unit (OTU1), as previously explained in relation to the description of Figure 1A.

Moreove, in the function 213a it is performed the demapping of the frame of the level 1 Optical Channel Data Unit (ODU1) from the frame of the level 1 Optical Channel Data Unit (OTU1).

The first output module further comprises a function 214 which performs the functions of source and drain termination for the level 1 Optical Channel Data Unit (OTU1), i.e. addition and extraction, respectively, of the overhead of the Level 1 Optical Channel Data Unit (OTU1 overhead).

The functions 213b, 215 of the second output module are analogous to the functions 213a, 214, respectively, of the first output module.

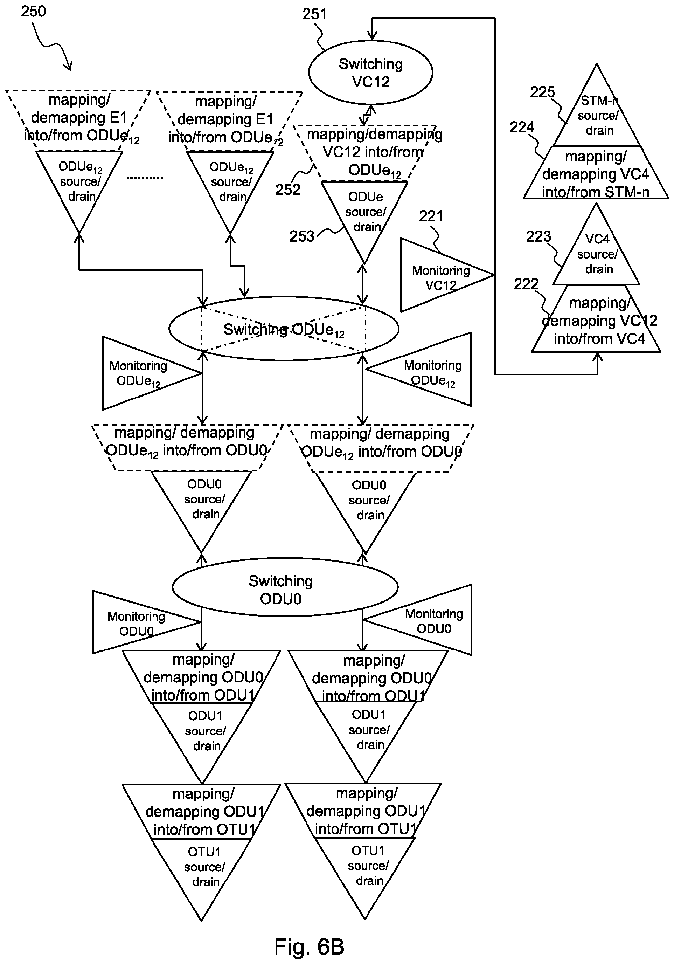

With reference to Figure 6B, it shows a block diagram of a functional model of a hybrid network element 250 which implements the second embodiment of the invention.

The network element 250 of Figure 6B differs from the network element 200 of Figure 6A in that it comprises a plurality of further SDH input/output modules for receiving/transmitting a plurality of digital signals of SDH type services.

For the sake of simplicity, Figure 6B shows only one further input/output module which comprises the functions 252, 253, 222, 223 that will be illustrated below, but more in general the network element 250 comprises a plurality of further input modules, each one having the functions 252, 253, 222, 223.

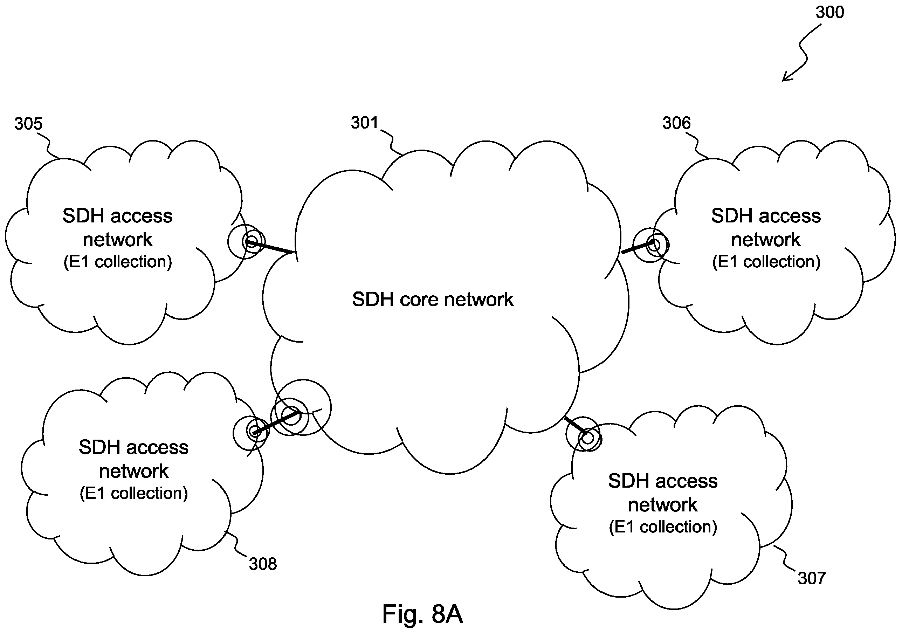

The network element 250 allows a gradual migration from an optical telecommunications network that manages both services of STM-n flows which are transported over an Optical Transport Network as defined in ITU-T standard, and services of low bit rate digital signals which are transported over an Optical Transport Network by mapping the frame of the first/second/third extended optical data units ODUeₙ (n= 12, 3, 4) according to the invention: in this manner it is possible to maintain the continuity of existing services during migration from hybrid SDH-OTN technology to OTN technology alone, as will be explained in greater detail below in the description of Figures 8A-8D.

In particular, an example is considered in which a plurality of lower order Virtual Containers of VC12 type are mapped into a higher order Virtual Container of VC4 type.

A first further input module of the network element 250 comprises a function 252 which performs the mapping of the frame of a first Virtual Container VC12 into the frame of a first extended optical data unit ODUe₁₂, as previously explained in relation to the description of Figures 1A, 1C and 2A.

Moreover, in the function 252 it is performed the demapping of the frame of the first Virtual Container VC12 from the frame of the first extended optical data unit ODUe₁₂.

The first further input module further comprises a function 253 which performs the functions of source and drain termination for the frame of the first extended optical data unit ODUe₁₂, i.e. addition, extraction and processing of the path overhead of the first extended optical data unit ODUe₁₂.

The previous considerations relating to the functions 252, 253 are applicable in an analogous manner to a second further input module and up to the last further input module, so that a plurality of frames of the first extended optical data unit ODUe₁₂ are obtained.

The network element 250 further comprises the function 251 performing an exchange of the positions of one or more of the frames of the Virtual Containers of VC12 type.

The network element 250 further comprises the function 221 performing non-intrusive monitoring of the path of each frame of the Virtual Containers VC12.

The network element 250 comprises a further output module which contains the functions 222, 223, 224, 225.

The function 222 performs the mapping of a plurality of Virtual Containers VC12 into a Virtual Container VC4, as defined in SDH standards ITU-T G.707 and G.783.

Moreover, in the function 222 it is performed the demapping of the plurality of Virtual Containers VC12 from the Virtual Container VC4.

The function 223 performs the functions of source and drain termination for the frame of the Virtual Container VC-4, as defined in standards SDH ITU-T G.707 and G.783.

The function 224 performs the mapping of the frame of the Virtual Container VC-4 into the level n Synchronous Transport Module (STM-n), n= 1, 4, 8, 16, 64, 256, as defined in standards SDH ITU-T G.707 and G.783.

Moreover, in the function 224 it is performed the demapping of the frame of the Virtual Container VC-4 from the level n Synchronous Transport Module (STM-n).

The function 225 performs the functions of source and drain termination for the STM-n frame.

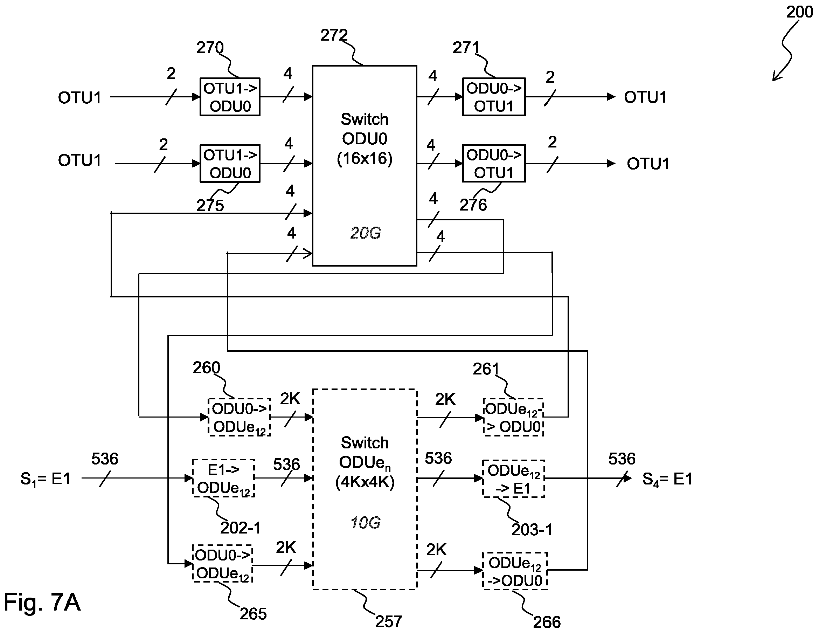

With reference to Figure 7A, it shows a possible architecture of the network element 200 of the first embodiment of the invention.

The network element 200 is thus a possible embodiment of the functional model of Figure 6A.

The network element 200 comprises, in its lower part, the new blocks indicated with a broken line and, in its upper part, the blocks defined in the standards of the Optical Transport Network (OTN) indicated with a continuous line.

It is supposed that the network element 200 is configured to locally receive 536 plesiochronous input digital signals E1 and locally extract 536 plesiochronous output digital signals E1, but the invention is applicable more in general to a plurality of digital signals of various types of services with a low bit rate.

In particular, the network element 200 comprises, in its lower part, the following blocks:
- a local input port 202-1 configured to insert and map 536 plesiochronous digital signals E1 into 536 respective frames of the first extended optical data unit ODUe₁₂, thus the local input port 202-1 performs the functions 2-1a.1, 2-1b.1, 2-1a.2, 2-1b.2, ... 2-1a.536, 2-1b.536 (in the input direction from 2-1a.1 to 207) previously illustrated in the functional diagram of Figure 6A;
- a local output port 203-1 configured to extract (i.e. terminate) 536 plesiochronous digital signals E1 from 536 respective frames of the first extended optical data unit ODUe₁₂, thus the local output port 203-1 performs the functions 2-1a.1, 2-1b.1, 2-1a.2, 2-1b.2, ... 2-1a.536, 2-1b.536 (in the output direction from 207 to 2-1a.1) previously illustrated in the functional diagram of Figure 6A;

- a first demapper 260 configured to demap a plurality of frames equal to a multiple of 536 of the first extended optical data unit ODUe₁₂ from four frames of digital signals ODUO received from a second switching matrix 272 (for example, the number of frames of the first extended optical data unit ODUe₁₂ is equal to 2,144);
- a first mapper 261 configured to map a plurality of frames equal to the multiple of 536 of extended optical data unit ODUe₁₂ generated from the second switching matrix 272 into 4 frames of digital signals ODUO (in the example considered, the number of frames of the first extended optical data unit ODUe₁₂ is equal to 2,144);
- a second demapper 265 configured to demap a plurality of frames equal to the multiple of 536 of frames of the first extended optical data unit ODUe₁₂ from 4 frames of digital signals ODUO received from the second switching matrix 272 (in the example considered, the number of frames of the first extended optical data unit ODUe₁₂ is equal to 2,144);
- a second mapper 266 configured to map a plurality of frames equal to the multiple of 536 of frames of the first extended optical data unit ODUe₁₂ generated from the second switching matrix 272 into four frames of digital signals ODUO (in the example considered, the number of frames of the first extended optical data unit ODUe₁₂ is equal to 2,144);
- a first switching matrix 257 connected at the input with the output of the local input port 202-1, with the output of the first demapper 260 and with the output of the second demapper 265, and connected at the output with the local output port 203-1, with the first mapper 261 and with the second mapper 266, wherein the first switching matrix 257 is configured to switch positions between a number of frames equal to a multiple of 536 of frames of the first extended optical data unit ODUe₁₂ on the input side and a plurality of frames equal to the multiple of 536 of frames of the first extended optical data unit ODUe₁₂ on the output side (in the example considered, the number of input/output frames of the first extended optical data unit ODUe₁₂ is equal to 4,288); therefore, the first switching matrix 257 performs the function 207 previously illustrated in the functional diagram of Figure 6A.

Furthermore, the network element 200 comprises, in its upper part, the following blocks:
- a first input port 270 configured to demap and demultiplex two OTU1 input frames in 4 ODUO frames;
- a second input port 275 configured to demap and demultiplex 4 ODUO frames from two OTU1 frames;
- a first output port 271 configured to map and multiplex 4 ODUO frames generated from the second switching matrix 272 into two OTU1 frames, thus the first output port 271 performs the functions 3-2a, 211, 213a, 214 previously illustrated in the functional diagram of Figure 6A;
- a second output port 276 configured to map and multiplex 4 ODUO frames generated as output from the second switching matrix 272 into two OTU1 frames, thus the second output port 276 performs the functions 3-2b, 212, 213b, 215 previously illustrated in the functional diagram of Figure 6A;
- the second switching matrix 272 connected at the input with the output of the first input port 270, with the second input port 275 and with the outputs of the blocks 261 and 266, and connected at the output with the first output port 271, with the second output port 276 and with the blocks 260, 265, wherein the second switching matrix 272 is configured to switch positions between 16 ODUO input frames and 16 ODUO output frames (therefore, the second switching matrix 272 performs function 210 previously illustrated in the functional diagram of Figure 6A).

It should be noted that the first switching matrix 257 performs cross-connection of both frames of the first extended optical data unit ODUe₁₂ that have been locally inserted into the network element 200 by means of the plesiochronous signals E1 and frames of the first extended optical data unit ODUe₁₂ that have been generated as output from the second switching matrix 272 (and have thus been received from other network elements by means of the signal OTU1 received as input).

The second switching matrix 272, by contrast, performs both cross-connection of ODUO frames that have been received by means of the two signals OTU1 received as input from other network elements, and switches ODUO frames that have been generated locally through the insertion of the plesiochronous signals E1.

Therefore, the network element 200 is capable of locally inserting/terminating 536 plesiochronous signals E1 by means of the local input/output ports, is capable of receiving (from another network element connected to it) 4,288 plesiochronous signals E1 by means of the two input ports and is capable of transmitting (towards another network element connected to it) 4,288 plesiochronous signals E1 by means of the two output ports.

It should be noted that the case considered in Figure 7A is the one in which the number of the input digital signals S₁ is equal to 536, since the mapping of E1 type plesiochronous digital signals into the first extended optical data unit ODUe₁₂ has been considered, as previously explained in detail in relation to Figure 1C.

However, in the case of mapping of E3 type plesiochronous input digital signals S₂, the local input port 202-1 is configured to receive 24 plesiochronous digital signals E3 and map them into 24 respective frames of the second extended optical data unit ODUe₃, thus generating, as output, 24 frames of the second extended optical data unit ODUe₃.

The previous considerations related to Figure 7A can be applied in an analogous manner to the local output port 203-1, the first demapper 260, the first mapper 261, the second demapper 265 and the second mapper 266, replacing the number 536 with 24 and replacing the first extended optical data unit ODUe₁₂ with the second extended optical data unit ODUe₃.

Furthermore, in the case of mapping of input digital signals S₃ of higher order Virtual Containers VC4, the local input port 202-1 is configured to receive 8 higher order Virtual Containers VC4 and map them into 8 respective frames of the third extended optical data unit ODUe₄, generating, as output, 8 frames of the third extended optical data unit ODUe₄.

The previous considerations related to Figure 7A can be applied in an analogous manner to the local output port 203-1, the first demapper 260, the first mapper 261, the second demapper 265 and the second mapper 266, replacing the number 536 with 8 and replacing the first extended optical data unit ODUe₁₂ with the third extended optical data unit ODUe₄.

A first example of processing of the digital signal carried out by the network element 200 is that of local insertion of plesiochronous signals E1 for transport over the OTN and comprises the following operations:
- the local input port 202-1 receives the plesiochronous signals E1 and maps them into respective frames of the first extended optical data unit ODUe₁₂ according to the invention;
- the first switching matrix 257 receives, as input from the local input port 202-1, the frames of the first extended optical data unit ODUe₁₂ and makes the cross-connection between the input frames of the first extended optical data unit ODUe₁₂ and the output frames of the first extended optical data unit ODUe₁₂;
- the first mapper 261 receives, as input from first switching matrix 257, the output frames of the first extended optical data unit ODUe₁₂ and maps them into the ODUO frames, according to the invention;
- the second switching matrix 272 receives, as input from the first mapper 261, the ODUO frames and makes the cross-connection between the ODUO input frames and ODUO output frames;
- the first output port 271 receives, as input from the second switching matrix 272, the ODUO output frames and maps and multiplexes them into the signal OTU1, which is then transmitted as output over an optical fibre.

A second example of processing of the digital signal carried out by the network element 200 is the local extraction of the plesiochronous signals E1 from the OTN and comprises the following operations:
- the first input port 270 receives the signal OTU1 via an optical fibre (connected to another network element) and extracts from it the ODUO frames;
- the second switching matrix 272 receives the ODUO frames from first input port 270 and makes a cross-connection between the ODUO input frames and ODUO output frames;
- the first demapper 260 receives the ODUO output frames as input from the second switching matrix 272 and extracts the frames of the first extended optical data unit ODUe₁₂;
- the first switching matrix 257 receives the frames of the first extended optical data unit ODUe₁₂ as input from the first demapper 260 and makes a cross-connection between the input frames of the first extended optical data unit ODUe₁₂ and output frames of the first extended optical data unit ODUe₁₂;
- the local output port 203-1 receives the output frames of the first extended optical data unit ODUe₁₂ from the first switching matrix 257 and extracts from them the plesiochronous signals E1.

A third example of processing of the digital signal carried out by the network element 200 is the forwarding of plesiochronous signals E1 across OTN networks and differs from the second example in that the frames of the first extended optical data unit ODUe₁₂ output from the first switching matrix 257 are received by the first mapper 261, which maps them into the ODUO frames and then the process continues in a manner analogous to the first example, eventually arriving at the transmission of the signal OTU1, which carries the plesiochronous signals E1.

It should be noted that Figure 7A only shows one possible embodiment, that is, there may be embodiments with different values in terms of the number and type of digital signals inserted into/extracted from the network element 200, different switching capacities of the switching matrices 257, 272 and a different type of scheme of generating the ODUn and OTUn frames.

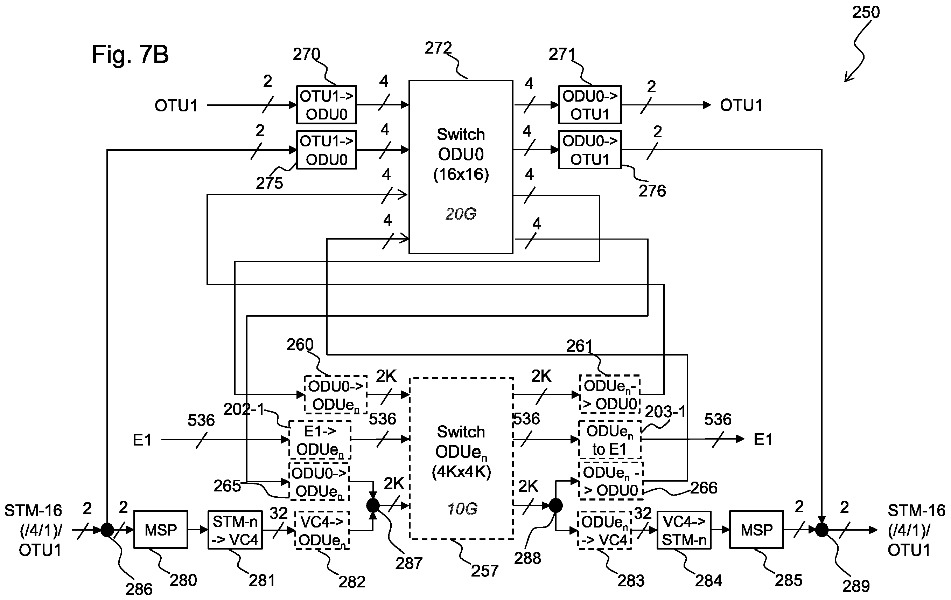

With reference to Figure 7B, it shows a possible architecture of the network element 250 of the second embodiment of the invention.

The network element 250 is thus a possible embodiment of the functional model of Figure 6B.

The network element 250 differs from the network element 200 of Figure 7A in that it further comprises an SDH (Synchronous Digital Hierarchy) input port composed of blocks 280, 281, 282 in order to receive, as input, alternatively:
- two SDH flows of the STM-16 type;
- eight SDH flows of the STM-4 type;
- thirty-two SDH flows of the STM-1 type;
- two flows of the OTU1 type.

The network element 250 further comprises an SDH output port composed of blocks 283, 284, 285 in order to generate, as output, alternatively:
- two SDH flows of the STM-16 type;
- eight SDH flows of the STM-4 type;
- thirty-two SDH flows of the STM-1 type;
- two flows of the OTU1 type.

In particular, the input port SDH comprises:
- the block 280 configured to receive two input STM-16 flows (or eight STM-4 flows or thirty-two STM-1 flows) and to carry out multiplex section protection (commonly known as MSP) of the two STM-16 input flows;
- a block 281 connected in cascade with the block 280 and configured to demultiplex the 2 STM-16 flows (or 8 STM-4 flows or 32 STM-1 flows) in 32 higher order VC4 type Virtual Containers;
- a third demapper 282 configured to demap frames of the first extended optical data unit ODUe₁₂ from 32 Virtual Containers VC4; therefore, the third demapper 282 performs the functions 253, 252, 222, 223 (in the input direction) previously illustrated in the functional diagram of Figure 6B.

More in particular, the third demapper 282 has the following functions:
- termination of higher order Virtual Containers VC4;
- extraction up to 63 lower order Virtual Containers VC12 from each of the 32 higher order Virtual Containers VC4, up to a maximum of 63 x 32 = 2,016 lower order Virtual Containers VC12;
- mapping of the extracted lower order Virtual Containers VC12 into the respective frame of the first extended optical data unit ODUe₁₂;
- mapping of not terminated higher order Virtual Containers VC4 into the frame of the third extended optical data unit ODUe₄.

Alternatively, in the event of the use of Virtual Containers of the VC3 type (instead of the lower order Virtual Containers VC12), the third demapper 282 has the following functions:
- termination of the higher order Virtual Containers VC4;
- extraction up to 3 Virtual Containers VC3 from each of the 32 higher order Virtual Containers VC4, up to a maximum of 3 x 32 = 96 Virtual Containers VC3;
- mapping of the extracted Virtual Containers VC3 into the frame of the second extended optical data unit ODUe₃;
- mapping of the extracted lower order Virtual Containers VC12 into the respective frame of the first extended optical data unit ODUe₁₂;
- mapping of higher order Virtual Containers VC4 not terminated into the frame of the third extended optical data unit ODUe₄.

The SDH output port comprises:
- a third mapper 283 configured to map frames of the first extended optical data unit ODUe₁₂ generated as output from the first switching matrix 257 into 32 Virtual Containers VC4, thus the third mapper 283 performs the functions 253, 252, 222, 223 (in the output direction) previously illustrated in the functional diagram of Figure 6B;
- a block 284 connected in cascade with the block 283 and configured to map 32 Virtual Containers VC4 in two STM-16 flows (or in eight STM-4 flows or in thirty-two STM-1 flows);
- a block 285 connected in cascade with the block 284 and configured to receive two STM-16 input flows (or eight STM4 flows or thirty-two STM-1 flows) and perform multiplexed section protection (MSP) of the two STM-16 input flows.

The third mapper 283 has a dual function compared to that of the third demapper 282, i.e. the third mapper 283 has the following functions:
- termination up to 2,016 frames of the first extended optical data unit ODUe₁₂;
- extraction up to 2,016 lower order Virtual Containers VC12 from the respective frames of the first extended optical data unit ODUe₁₂;
- mapping up to 2,016 lower order Virtual Containers VC12 into 32 higher order Virtual Containers VC4.

The network element 250 further comprises:
- a switch 286 configured to transmit, alternatively, the STM-16 (or STM-4 or STM-1) input flows towards the block 280 of the SDH input port or the signal OTU1 towards the second input port 275;
- a first selector 287 configured to select among 2,144 frames of the first extended optical data unit ODUe₁₂ generated as output from the second demapper 265 and 2,016 frames of the first extended optical data unit ODUe₁₂ generated as output from the third demapper 282;
- a switch 288 configured to transmit, alternatively, 2,144 frames of the first extended optical data unit ODUe₁₂ output from the first switching matrix 257 towards the second mapper 266 or 2,106 frames of the first extended optical data unit ODUe₁₂ output from the first switching matrix 257 towards the third mapper 283;
- a second selector 289 configured to select between the STM-16 flows (or between the STM-4 or STM-1 flows) generated as output from the block 285 and the signal OTU1 generated from the second output port 276.

Therefore, the network element 250 is capable of locally inserting/terminating 536 plesiochronous signals E1 by means of the local input/output ports, in a manner analogous to that of the network element 200.

Furthermore, the network element 250 is capable of receiving (from another network element connected to it), alternatively;
- 4,288 plesiochronous signals E1 from the OTN, analogously to the network element 200;
- 2,144 plesiochronous signals E1 from the OTN and 2,016 plesiochronous signals E1 from the SDH network.

Finally, the network element 250 is capable of transmitting (towards another network element connected to it), alternatively:
- 4,288 plesiochronous signals E1 across the OTN, analogously to the network element 200;
- 2,144 plesiochronous signals E1 across the OTN and 2,016 plesiochronous signals E1 across the SDH network.

A fourth example of processing of the digital signal carried out by the network element 250 is that of the insertion of lower order Virtual Containers VC12 into an OTN and comprises the following operations:
- the input port SDH receives STM-n flows, extracts from them higher order Virtual Containers VC4 (blocks 280, 281), extracts from them lower order Virtual Containers VC12 (third demapper 282) and generates from them the frames of the first extended optical data unit ODUe₁₂ (third demapper 282);
- the first switching matrix 257 receives, as input from the third demapper 282, the frames of the first extended optical data unit ODUe₁₂ and makes a cross-connection between the input frames of the first extended optical data unit ODUe₁₂ and the output frames of the first extended optical data unit ODUe₁₂;
- the first mapper 261 receives, as input from the first switching matrix 257, the output frames of the first extended optical data unit ODUe₁₂ and the process continues in an manner analogous to that of the first example described previously for the network element 200.

A fifth example of processing of the digital signal carried out by the network element 250 is that of transporting the plesiochronous signals E1 from an OTN to an SDH network and differs from the second example described previously for the network element 200 as regards the following operations:
- the third demapper 283 of the SDH output port receives, as input from the second switching matrix 272, the output frames of the first extended optical data unit ODUe₁₂, extracts from them the lower order Virtual Containers VC12, which are mapped into the higher order Virtual Containers VC4;
- the remaining blocks 284, 285 of the SDH output port map the higher order Virtual Containers VC4 into the STM-n output flows, which are then transmitted as output over an optical fibre.

With reference Figures 8A-8D, they shown the procedure of migration from a traditional SDH network to the OTN network according to the invention.

Figure 8A shows a traditional SDH type telecommunications network 300.

The network 300 comprises a central network 301 and four peripheral networks 305, 306, 307, 308 connected to the central network 301, wherein the central network 301 is indicated as the "SDH core network" and the four peripheral networks are indicated as "SDH access networks".

Each of the access networks 305, 306, 307, 308 implements the SDH standard and collects a plurality of E1 type low bit rate tributary signals, which are aggregated and mapped into the Virtual Containers VC12/VC4 as defined by the SDH standard.

The Virtual Containers VC12/VC4 (and thus the plurality of tributary signals E1 mapped into them) are then transported across the network core 301 which implements the SDH standard from the source access network (for example, the access network 305) to the destination access network (for example, the access network 306), in which they are extracted by the end user.

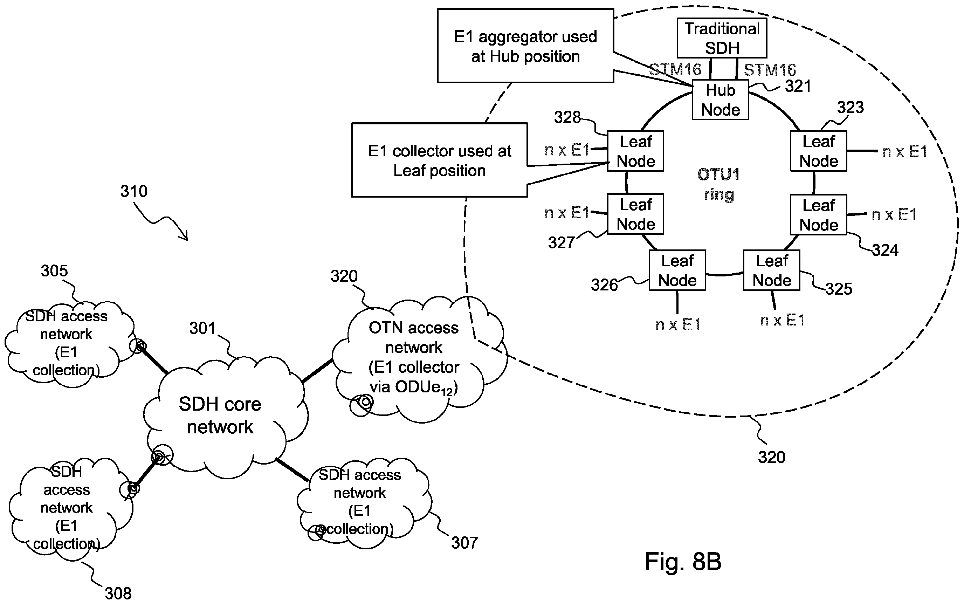

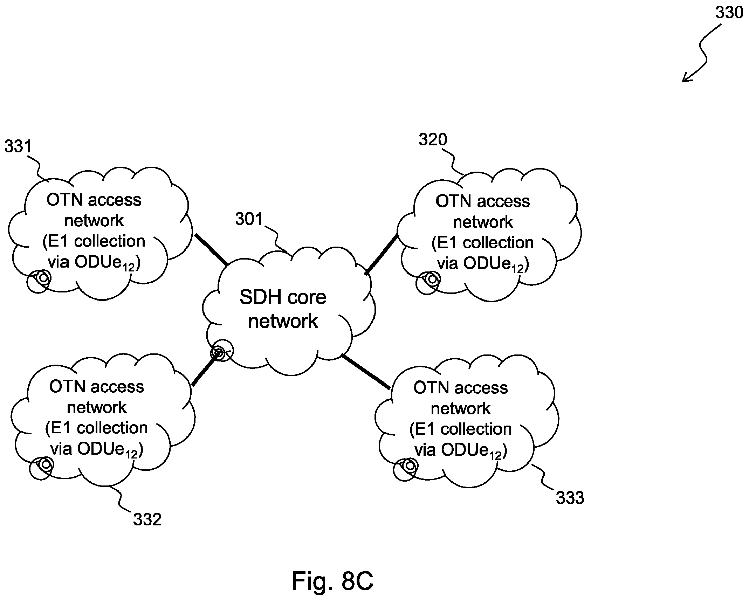

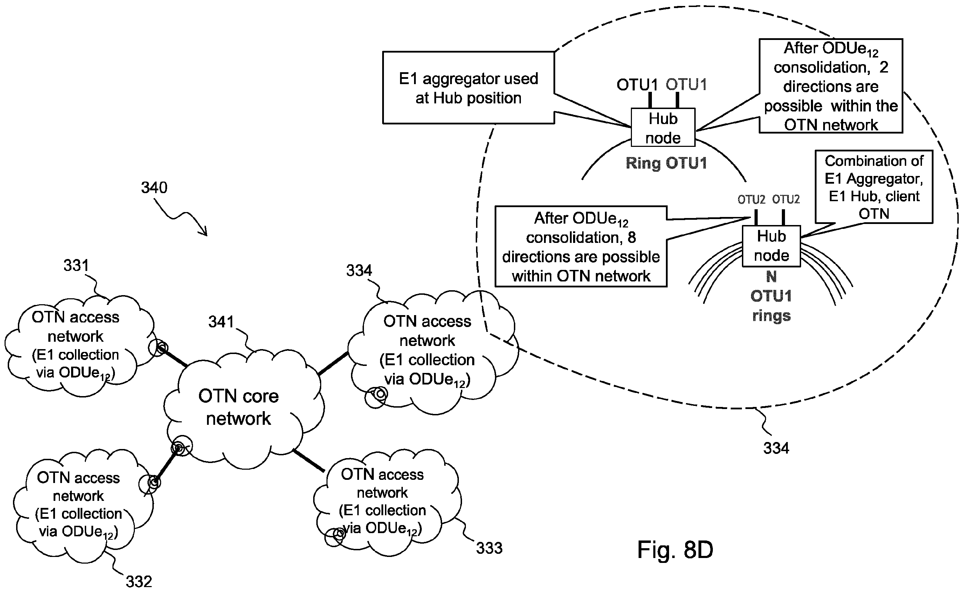

The migration procedure comprises three steps:
- the first step comprises the migration from the network 300 of Figure 8A to the network 310 of Figure 8B;
- the second step comprises the migration from the network 310 of Figure 8B to the network 330 of Figure 8C;
- the third (and last) step comprises the migration from the network 330 of Figure 8C to the network 340 of Figure 8D.

Figures 8B-8C show network architectures in which SDH (Synchronous Digital Hierarchy) technology coexists with OTN (Optical Transport Network) technology.

Figure 8B differs from Figure 8A in that an OTN type access network 320 is present in place of the access network 306: in this case, there was migration of only one access network 320 to the OTN standard, whereas the remaining part of the network 310 (i.e. the network core 301 and the access networks 305, 307, 308) was not migrated to the OTN standard and thus still implements the traditional SDH standard.

The OTN access network 320 comprises a hybrid network element of the previously illustrated type 250, which comprises a port that interconnects the OTN type access network 320 with the SDH type core network 301: in this manner it is possible to have interoperability between the OTN type access network 320 and the traditional SDH type core network 301.

The remaining elements of the access network 320 are instead implemented like the network element 200 illustrated previously.

The OTN access network 320 is preferably implemented with a OTU1 type ring topology, comprising:
- a "hub" (concentrator) node 321 implemented at least in part as the hybrid network element 250 (and comprising further interfaces, for example of the OTU2 and/or STM-16/4/1 type), having the function of interconnecting the OTN access network 320 with the SDH network core 301;
- six "leaf" nodes 323, 324, 325, 326, 327, 328, each one implemented as the network element 200 having the function of implementing OTN technology and transporting low bit rate services over the OTN network by means of the mapping according to the invention.

More in particular, each of the leaf nodes 323, 324, 325, 326, 327, 328 is a peripheral collector of E1 services collected along the OTU1 ring, which are concentrated towards the hub node 321, which then inserts the E1 services collected inside the SDH network core 301 by means of STM flows (for example, of the STM-16 type).

Let's consider, for example, one of the leaf nodes 323, 324, 325, 326, 327, 328, for example the leaf node 327, which receives, as input, one E1 service which is mapped into a lower order VC12 type Virtual Container of the SDH standard; at the leaf node 327 the Virtual Container VC12 is subsequently mapped (together with the addition of the path overhead field) into the frame of the first extended optical data unit ODUe₁₂ according to the invention, which is then encapsulated in the ODU0 frame according to the invention and the latter, in turn, into the OTU1 frame.

The frame of said first extended optical data unit ODUe₁₂ is received at the hub node 321, wherein the Virtual Container VC12 and the respective overhead field that had previously been added to the leaf node 327 is terminated (i.e. extracted): the path followed by the Virtual Container VC12 (and thus by the E1 service considered) inside the OTU1 rings was thus monitored by means of the overhead field.

Finally at the hub node 321, the Virtual Container VC12 is mapped into the Virtual Container VC4, which is in turn encapsulated in the STM-16 flow, which continues the path through the SDH network core 301 up to the destination network node positioned inside a destination access area.

The path overhead field (POH) of the Virtual Container VC12 is therefore used in the portions of the network 300 that have remained in SDH technology, i.e. in the network core 301 and in the access networks 305, 307, 308, thus enabling point-to-point monitoring of the path of the Virtual Container VC12 (and therefore of the service E1 transported by it).

Figure 8C differs from Figure 8B in that all of the access networks 331, 332, 333 are of the OTN type, having replaced the access networks 305, 308, 307: in this case, all four access networks 320, 331, 332, 333 have been migrated to the OTN standard, whereas the remaining part of the network 330 (i.e. the network core 301) has not been migrated to the OTN standard.

Each of the OTN access networks 331, 332, 333 comprises a hybrid network element 250 and the remaining network elements are of the type 200, analogously to what was previously illustrated for the OTN access network 320: interoperability between each of the OTN access networks 320, 331, 332, 333 and the SDH network core 301 is thus obtained.

Each of the OTN access networks 331, 332, 333 is preferably formed with an OTU1 ring topology, analogously to what was illustrated in Figure 8B in relation to the OTN access network 320; therefore, each of the OTN access networks 331, 332, 333 comprises a respective node analogous to the hub node 321 and built like the hybrid network element 250

The previous considerations regarding the OTN access network 320 are applicable in an analogous manner to each of the OTN access networks 331, 332, 333, with the difference that the Virtual Container VC12 which was inserted in a source access network is no longer always transported (as in the network 310) with SDH technology from the input to the output of the network core 301 and then to the destination network element positioned inside a destination access network; by contrast, in the network 330 said Virtual Container VC12 is mapped (at the input node of the destination access network) into the frame of the first extended optical data unit ODUe₁₂ according to the invention, which is then encapsulated in the ODU0 frame according to the invention and the latter in turn in the OTU1 frame according to OTN technology; thus the OTU1 frame follows the path (for example, in the OTU1 ring) in the OTN destination access network until arriving at the destination leaf node, in which the Virtual Container VC12 (and hence the service E1 transported therein) is terminated.

The path overhead field (POH) of the Virtual Container VC12 is thus still used to carry out point-to-point monitoring of SDH segments of the network 330, whereas the path overhead field of the first extended optical data unit ODUe₁₂ is used to carry out point-to-point monitoring of OTN segments of the network 330.

Figure 8D differs from Figure 8C in that the network core 341 is of the OTN type, having replaced the SDH network core 301: in this case, the entire telecommunications network 340 has been migrated to the OTN standard; it thus comprises network elements of the type 200 (i.e. no hybrid network elements 250 are present) and makes cross-connections with ODU0 type granularity.

Furthermore, in the telecommunications network 340 it is no longer necessary to map the service E1 into the Virtual Container VC12, i.e. the service E1 is mapped directly (together with the addition of the respective path overhead field) into the frame of the first extended optical data unit ODUe₁₂ and the point-to-point monitoring of the service E1 is carried out using the path overhead of the first extended optical data unit ODUe₁₂; alternatively, in the event that the service E1 is still transported by a Virtual Container VC12, the content of the path overhead field (POH) associated with the Virtual Container VC12 is ignored.

One or more of the OTN access networks 331, 332, 333, 334 are preferably implemented with OTU1 type ring topologies and optionally ring topologies of level OTU2 or higher, wherein the hub node of an access network collects a large number of E1 services and routes them into the network core 341 along a plurality of different directions (for example, two directions in the case of a hub node that transmits OTU1 type frames, or 8 directions in the case of a hub node that transmits OTU2 type frames).

It is also an object of the present invention a method for demapping digital signals from an Optical Transport Network.

The demapping method comprises the steps of:
- receiving an Optical Transport Unit (OTU1, OTU2, OTU3 or OTU4) and extracting an Optical Channel Data Unit of a level higher than zero (ODU1, ODU2, ODU3 or ODU4);
- demultiplexing (see 270 in Figure 7A) a Optical Channel Data Unit of level 0 (ODU0) from the Optical Channel Data Unit of a level higher than zero;
- demapping (see 260 in Figure 7A) a Optical Channel Payload Unit of level zero (OPU0) from the Optical Channel Data Unit of level 0 (ODU0);
- demapping (see 260 in Figure 7A) at least a portion of a multiplexed frame 50 from the Optical Channel Payload Unit of level zero (OPU0);
- demultiplexing a plurality of frames of digital signals (previously defined as first extended optical data unit ODUe₁₂, second extended optical data unit ODUe₃ and third extended optical data unit ODUe₄) from the multiplexed frame 50;
- demapping a plurality of digital output signals (see S₄ in Figure 7A) from the respective plurality of frames of digital signals, said demapping comprising the extraction of a respective path overhead field (see 11₁ₐ, 11₂ₐ, ... 11₅₃₆ₐ in Figure 2A) in each frame of said plurality of frames of digital signals, wherein each path overhead field carried monitoring information of the quality of the respective frame.

Preferably, the demapping method further comprises demapping the multiplexed frame from at least two contiguous Optical Channel Payload Units of level zero and comprises extracting a respective pointer field from each frame of the plurality of frames of digital signals, wherein each pointer field carries a value representative of the starting position of the respective frame inside the Optical Channel Data Unit of level 0.

## Claims

1. Method (1) for mapping digital signals into an Optical Transport Network, comprising the steps of:
a) mapping (2-1; 2-1a, 2-1b, 2-1c) a plurality of input digital signals (S1; 101, 102, ... 10536) into a respective plurality of frames (ODUe12; 111, 112, ... 11536) of digital signals, said mapping further comprising the insertion of a respective path overhead field (111a, 112a, ... 11536a) into each frame of said plurality of frames of digital signals, wherein each path overhead field carries monitoring information of the quality of the respective frame;
b) multiplexing (2d) said plurality of frames of digital signals in order to generate a multiplexed frame (50);
c) mapping (3-1) at least a portion of the multiplexed frame (50) into an Optical channel Payload Unit of level zero (51, OPU0);
d) mapping (3-1) said level zero Optical channel Payload Unit (OPU0) into an Optical Channel Data Unit of level zero (ODU0);
e) multiplexing (3-2; 3-3; 3-4; 3-5) said level zero Optical Channel Data Unit into an Optical Channel Data Unit of level higher than zero (ODU1; ODU2; ODU3; ODU4);
f) generating an Optical Transport Unit (OTU1; OTU2; OTU3; OTU4) carrying said Optical Channel Data Unit of level higher than zero.

2. Mapping method according to claim 1, wherein step a) further comprises the insertion of a respective pointer field (V1, V2) associated at least in part to each frame of said plurality of frames (111, 112, ... 11536) of digital signals, wherein each pointer field carries a value representative of the position wherein it starts the respective frame inside the level zero Optical Channel Data Unit,
and wherein step c) comprises mapping a multiplexed frame into at least two contiguous level zero Optical Channel Data Unit.

3. Mapping method according to any of the previous claims, wherein said plurality of input digital signals is selected among:
- a plurality of plesiochronous digital signals E1, each one having a bit rate equal to 2,048 Mbit/s;
- a plurality of lower order Virtual Containers VC12 of the Synchronous Digital Hierarchy, each one having a bit rate equal to 2,240 Mbit/s;
- a plurality of plesiochronous digital signals E3, each one having a bit rate equal to 34,368 Mbit/s;
- a plurality of higher order Virtual Containers VC3 of the Synchronous Digital Hierarchy, each one having a bit rate equal to 48,960 Mbit/s;
- a plurality of higher order Virtual Containers VC4 of the Synchronous Digital Hierarchy, each one having a bit rate equal to 150,3360 Mbit/s;
- a plurality of digital signals of Fast Ethernet type, each one having a bit rate equal to 100 Mbit/s.

4. Mapping method according to any of the previous claims, wherein said plurality of input digital signals comprises a first plurality and a second plurality of digital signals of different type of services, wherein step a) comprises:
- mapping the first plurality of digital signals into a respective first plurality of frames of digital signals, said mapping further comprising the insertion of a respective path overhead field into each frame of the first plurality of frames of digital signals, wherein each path overhead field carries monitoring information of the quality of the respective frame;
- mapping the second plurality of digital signals into a respective second plurality of frames of digital signals, said mapping further comprises the insertion of a respective path overhead field into each frame of the second plurality of frames of digital signals, wherein each path overhead field carries monitoring information of the quality of the respective frame;
and wherein step b) comprises:
- sub-dividing the multiplexed frame into a plurality of time slots (MTS), each one having a size equal to the frame of the first plurality of frames;
- time division multiplexing the first and second plurality of frames into the multiplexed frame, wherein:
• each frame of the first plurality of frames is assigned to at least one time slot;
• each frame of the second plurality of frames is assigned to a plurality of time slots;
and wherein the number of the plurality of time slots assigned to each frame of the second plurality of frames in each mutiplexed frame is greater than the number of the at least one time slot assigned to each frame of the first plurality of frames in each mutiplexed frame,
and wherein the number of the time slot is assigned according to an increasing consecutive order, starting from the minimum number of time slot available into the multiplexed frame.

5. Mapping method according to any of the previous claims, wherein the Optical Transport Network is defined in the standard ITU-T G.709, G.798 and G.872, and wherein:
- said level zero Optical channel Payload Unit is indicated as OPU0 in said standard;
- said Optical Channel Data Unit of level zero is indicated as ODU0 in said standard;
- said Optical Channel Data Unit of level higher than zero is indicated as ODU1, ODU2, ODU3, ODU4 in said standard.

6. Mapping method according to any of the previous claims, further comprising repeating steps a)-f) in order to generate a first plurality of successive multiplexed frames (501, 502, ... 50956) and a second plurality of successive frames of the level zero Optical Channel Data Unit (800, 801, ... 801214),
wherein the time length of the first plurality of successive multiplexed frames is equal to the time length of a multi-frame cycle composed of the second plurality of successive frames of the level zero Optical Channel Data Unit, the number of the plurality of multiplexed frames being smaller than the number of the plurality of frames of the level zero Optical Channel Data Unit.

7. Mapping method according to the previous claims, wherein:
- the number of the first plurality of multiplexed frames is equal to 956;
- the number of the second plurality of frames of the level zero Optical channel Payload Unit is equal to 1.215.

8. Mapping method according to claims 6 or 7, wherein step c) further comprises the insertion into the level zero Optical channel Payload Unit (OPUO) of:
- a multi-frame counter field (MF) having integer values identifying the number of the frame of the level zero Optical Channel Data Unit inside the multi-frame cycle;
- a field (V1_LO) indicating the position of the start of the multiplexed frame for each value of the multi-frame counter.

9. Mapping method according to any of the previous claims, wherein each path overhead field comprises at least one byte having at least one of the following functions:
- monitoring of the error rate of the network connection carrying the respective digital signal frame (ODUe12; 111);
- identifying unequipped signals;
- identifying possible erroneous path connection;
- reporting to the remote transmitter the occurrence of path errors detected at the receiver;
- reporting to the remote transmitter the occurrence of path failures detected at the receiver.

10. Network element (200) for an Optical Transport Network, the network element comprising a local input port (202-1), a first mapper (261), a first switching matrix (257) interposed between the local input port and the first mapper, an output port (271), a second switching matrix (272) interposed between the first mapper and the output port, wherein:
- the local input port (202-1) is configured to receive a plurality of input digital signals (S1; 101, 102, ... 10536) and to map (2-1; 2-1a, 2-1b) said plurality of input digital signals into a respective plurality of frames (ODUe12; 111, 112, ... 11536) of input digital signals, said mapping further comprising the insertion of a respective path overhead field (111a, 112a, ... 11536a) into each frame of said plurality of frames of input digital signals, wherein each path overhead field carries monitoring information of the quality of the respective frame;
- the first switching matrix (257) is configured to receive said plurality of frames (ODUe12; 111, 112, ... 11536) of input digital signals generated from the local input port (202-1) and to switch the positions between said plurality of frames of input digital signals and a plurality of frames of output digital signals;
- the first mapper (261) is configured to:
• receive said plurality of frames of output digital signals generated from the first switching matrix and multiplex (2-1c, 2d) the plurality of output frames in order to generate a multiplexed frame (50);
• map (3-1) at least a portion of the multiplexed frame (50) into an Optical channel Payload Unit of level zero (51, OPU0);
• map (3-1) said level zero Optical channel Payload Unit (OPU0) into an Optical Channel Data Unit of level zero (ODU0);
- the second switching matrix (272) is configured to switch the position between a plurality of level zero input Optical Channel Data Unit and a plurality of level zero output Optical Channel Data Unit and is further configured to switch between said level zero Optical Channel Data (ODU0) at the output of the first mapper and said plurality of level zero output Optical Channel Data Unit;
- the output port (271) is configured to:
• receive said plurality of level zero output Optical Channel Data Unit generated from the second switching matrix and multiplex the plurality of level zero output Optical Channel Data Unit into an Optical Channel Data Unit of level higher than zero (ODU1);
• generate an Optical Transport Unit (OTU1) carrying said Optical Channel Data Unit of level higher than zero.

11. Network element according to the previous claim, further comprising a local output port (203-1) and a first demapper (260), wherein:
- the first demapper (260) is configured to receive at least part of the plurality of level zero output Optical Channel Data Unit generated from the second switching matrix (272) and to extract, from said at least part of the plurality of level zero output Optical Channel Data Unit, a further plurality of frames (ODUe12; 111, 112, ... 11536) of input digital signals,
- the first switching matrix (257) is further configured to receive said further plurality of frames (ODUe12; 111, 112, ... 11536) of input digital signals and to switch the positions between said further plurality of frames of input digital signals and a further plurality of frames of output digital signals;
- the local output port (203-1) is configured to receive said further plurality of frames of output digital signals (ODUe12) and to extract, from the further plurality of frames of output digital signals (ODUe12), a respective plurality of output digital signals (E1).

12. Network element according to claims 10 or 11, further comprising:
- an input port of the Synchronous Digital Hierarchy (280, 281, 282) configured to:
• receive (280) at least one input data flow of the Synchronous Transport Module (STM-16) of the Synchronous Digital Hierarchy;
• demultiplex (281) the at least one input data flow of the Synchronous Transport into at least one higher order Virtual Container (VC4);
• the input port comprises a demapper (282) configured to:
▪ extract a plurality of lower order Virtual Containers (VC12) from the at least one higher order Virtual Container (VC4);
▪ map the plurality of extracted lower order Virtual Containers into a respective plurality of frames of digital signals (ODUe12);
and wherein the first switching matrix (257) is further configured to crossconnect the output of said demapper (282) with the input of the first mapper (261).

13. Network element according to the previous claim, further comprising an output port of the Synchronous Digital Hierarchy (283, 284, 285) configured to:
• receive (283) a further plurality of frames of output digital signals generated from the first switching matrix (257);
• extract (283) a further plurality of lower order Virtual Containers (VC12) from said further plurality of respective frames of output digital signals;
• map (283) said further plurality of lower order Virtual Containers (VC12) into at least one higher order Virtual Container (VC4);
• multiplex (284, 285) said at least one higher order Virtual Container (VC4) into at least one output data flow of the Synchronous Transport Module (STM-16) of the Synchronous Digital Hierarchy.

14. Optical telecommunications network comprising at least one network element according to any of the claims from 10 to 13.

15. Frame (51) of an Optical channel Payload Unit of level zero (OPU0) for an Optical Transport Network, the frame comprising at least one portion of a multiplexed frame (50), wherein:
- said multiplexed frame comprises a multiplexing of a plurality of frames (ODUe12; 111, 112, ... 11536) of digital signals;
- each frame (111, 112, ... 11536) of said plurality of frames of digital signals comprises a first field (111b) carrying a respective input digital signal (101, 102, ... 10536) and comprises a second field (111b) carrying a respective path overhead field, wherein the path overhead field carries monitoring information of the quality of the respective digital signal frame.

16. Frame according to the previous claim, wherein the multiplexed frame comprises a plurality of pointer fields (V1, V2) equal to the number of said plurality of frames of digital signals,
wherein each pointer field carries a value representative of the position wherein it starts the respective frame inside a level zero Optical Channel Data Unit (ODU0) encapsulating the frame (51) of the level zero Optical channel Payload Unit (OPU0).
